(19) Europäisches Patentamt
European Patent Office
Office européen des brevets

(11) EP 4 562 076 B1

(12) **EUROPÄISCHE PATENTSCHRIFT**

(45) Veröffentlichungstag und Bekanntmachung des Hinweises auf die Patenterteilung:
**10.06.2026 Patentblatt 2026/24**

(21) Anmeldenummer: **23744810.5**

(22) Anmeldetag: **21.07.2023**

(51) Internationale Patentklassifikation (IPC):
***C08J 3/22*** ***(2006.01)*** ***C08L 69/00*** ***(2006.01)***

(52) Gemeinsame Patentklassifikation (CPC):
(C-Sets verfügbar)
**C08L 69/00; C08J 3/226;** C08J 2369/00;
C08J 2469/00 (Forts.)

(86) Internationale Anmeldenummer:
**PCT/EP2023/070255**

(87) Internationale Veröffentlichungsnummer:
**WO 2024/022964 (01.02.2024 Gazette 2024/05)**

(54) **MINERALGEFÜLLTE POLYCARBONAT-BLEND-FORMMASSE MIT NIEDRIGEM BPA-GEHALT UND VERFAHREN ZU IHRER HERSTELLUNG**

MINERAL FILLED POLYCARBONATE BLEND MOULDING MATERIAL WITH LOW BPA CONTENT AND METHOD OF ITS PREPARATION

MATÉRIAU DE MOULAGE À FAIBLE TENEUR EN BPA À BASE D’UN MÉLANGE DE POLYCARBONATE CHARGÉ DE MINÉRAL, ET SON PROCÉDÉ DE PRÉPARATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.07.2022 EP 22187468**

(43) Veröffentlichungstag der Anmeldung:
**04.06.2025 Patentblatt 2025/23**

(73) Patentinhaber: **Covestro Deutschland AG**
**51373 Leverkusen (DE)**

(72) Erfinder:
- **SEIDEL, Andreas**
**41542 Dormagen (DE)**
- **WINTERMEYER, Jan**
**46485 Wesel (DE)**
- **NOLTE, Marius**
**50933 Köln (DE)**
- **WENZ, Eckhard**
**50937 Köln (DE)**
- **THIEM, Hans-Juergen**
**41539 Dormagen (DE)**

(74) Vertreter: **Levpat**
**c/o Covestro AG**
**Gebäude K12**
**51365 Leverkusen (DE)**

(56) Entgegenhaltungen:
**WO-A1-2009/030358** **WO-A1-2019/076495**
**US-A1- 2007 232 739**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 562 076 B1

(52) Gemeinsame Patentklassifikation (CPC): (Forts.)

C-Sets
**C08L 69/00, C08L 51/04, C08L 51/085,**
**C08L 25/12, C08K 3/34**

## Beschreibung

Die Erfindung betrifft eine mineralgefüllte Polycarbonat-Blend-Formmasse, ein Verfahren zur Herstellung einer mineralgefüllten Polycarbonat-Blend-Formmasse, die Verwendung der Formmasse zur Herstellung eines Formkörpers sowie einen Formkörper enthaltend die Formmasse.

Polycarbonat-Blend Formmassen sind seit langem bekannt. Aus den Formmassen werden Formkörper für eine Vielzahl von Anwendungen, beispielsweise für den Automobilbereich, für den Bausektor und für den Elektronikbereich hergestellt. Als Polycarbonate werden dabei in den meisten Fällen Polycarbonate enthaltend Struktureinheiten abgeleitet von Bisphenol-A eingesetzt. "Enthaltend Struktureinheiten abgeleitet von Bisphenol-A" bedeutet im Kontext dieser Erfindung, dass bei der Herstellung des Polycarbonats Bisphenol-A als Diphenol-Komponente eingesetzt wird, optional zusammen mit anderen Diphenolen. Das Bisphenol-A liegt also über Carbonat-Gruppen, die im Allgemeinen bei der Herstellung des Polycarbonats durch eine Polykondensationsreaktion der Hydroxy-Gruppen im Bisphenol-A mit Säurehalogenid- oder Ester-Gruppen eines Kohlensäurehalogenids beziehungsweise Kohlensäureesters entstehen, in die Polymerkette kovalent eingebaut vor.

Die Eigenschaften der aus solchen thermoplastischen Formmassen hergestellten Formkörper lassen sich durch die Auswahl der Komponenten der Zusammensetzungen und der Mengenbereiche, in denen diese Komponenten in den Zusammensetzungen zum Einsatz kommen an die Anforderungen der jeweiligen Anwendung anpassen. Zur Erhöhung der Zähigkeit, insbesondere bei tiefen Temperaturen, werden dem Polycarbonat Blendpartner mit kautschukelastischen Eigenschaften als Schlagzähmodifikatoren zugesetzt.

Insbesondere im Anwendungsbereich von Automobilkarosseriebauteilen sowie bei Zweikomponentenbauteilen bestehend aus einem opaken Rahmen und einem transparenten oder transluzenten Fenster gibt es mit dem Ziel der Reduktion von Fahrzeuggewicht und damit des Treibstoffverbrauchs, wegen der einfachen Herstellbarkeit von Automobilkunststoffbauteilen im Spritzgussverfahren sowie der höheren Designfreiheit und Möglichkeit zur Funktionsintegration ein zunehmendes Bestreben, Metall durch Kunststoff zu substituieren.

Für großflächige horizontale Automobilkarosseriebauteile wird dabei unter anderem gefordert, dass die Formkörper einen niedrigen thermischen Ausdehnungskoeffizienten für eine hohe Maßhaltigkeit und Verzugsarmut zur Realisierung geringer Spaltmaße sowie eine hohe Materialsteifigkeit (hoher Elastizitätsmodul) aufweisen. Um ein solches Anforderungsprofil zu erfüllen, werden in vielen Fällen mineralische Füllstoffe wie beispielsweise Talk als Bestandteil der Polycarbonat-Blend-Formmasse eingesetzt. Weiterhin können anorganische Pigmente wie Titandioxid zur Einfärbung der Formmassen verwendet werden.

EP 0 391 413 A2 offenbart Polymerzusammensetzungen enthaltend 40 bis 80 Gew.-% aromatisches Polycarbonat, 5 bis 50 Gew.-% kautschukmodifiziertes Homopolymer oder Copolymer eines vinylaromatischen Monomers, beispielsweise ABS, und 4 bis 18 Gew.-% eines plättchenförmigen anorganischen Füllstoffs, beispielsweise Talk, welche sich durch einen reduzierten thermischen Ausdehnungskoeffizienten, gute Tieftemperaturduktilität und hohe Wärmeformbeständigkeit auszeichnen.

EP 0 452 788 A2 offenbart Formteile hergestellt aus talkgefüllten PC/ABS-Zusammensetzungen, welche sich durch eine Kombination guter mechanischer Eigenschaften und einen reduzierten Glanzgrad auszeichnen. Die Zusammensetzungen enthalten 10 bis 80 Gew.-Teile Polycarbonat, 20 bis 90 Gew.-Teile ABS und 2 bis 25 Gew.-Teile, bezogen auf in Summe 100 Gew.-Teile Polycarbonat und ABS, an Talk mit einer mittleren Partikelgröße von 1,5 bis 20 μm. Die Formmassen werden aus diesen Zusammensetzungen über ein einschrittiges Compoundierungsverfahren hergestellt.

WO 98/51737 A1 offenbart thermoplastische Polymerzusammensetzungen mit verbesserten Eigenschaften, beispielsweise in Bezug auf Wänneformbeständigkeit, Schmelzefließfähigkeit, Tieftemperaturschlagzähigkeit und Dimensionsstabilität, enthaltend 65 bis 85 Gew.-% aromatisches Polycarbonat, 10 bis 50 Gew.-% eines kautschukmodifizierten Copolymers, beispielsweise ABS, und 1 bis 15 Gew.-% eines partikulären mineralischen Füllstoffs, beispielsweise Talk, mit einer mittleren größten charakteristischen Dimension von 0,1 bis 30 μm. Auch diese Anmeldung offenbart ausschließlich die Herstellung der thermoplastischen Formmassen über ein einschrittiges Compoundierungsverfahren.

Der Einsatz von anorganischen Füllstoffen wie Talk oder auch Titandioxid in den Polycarbonat-Blend-Formmassen kann aber zu einer erhöhten Empfindlichkeit gegenüber thermischer Belastung führen, weil etwa basische Bestandteile des Füllstoffs einen Abbau des Polycarbonat-Molekulargewichts auslösen. Um einen solchen Effekt, der sich letztlich ungünstig auf die mechanischen Eigenschaften und den Bauteiloberflächenqualität auswirken kann, zu vermeiden, ist eine Stabilisierung der Formmassen vorteilhaft. Dazu eignen sich beispielsweise Brönsted-saure Verbindungen, die bei der Compoundierung der Formmassen zugefügt werden.

WO 2013/060687 A1 offenbart mit einer Brönsted-sauren Verbindung stabilisierte Polycarbonat-Zusammensetzungen mit verbesserter thermischer Verarbeitungsstabilität, enthaltend optional kautschukmodifiziertes Vinyl(co)polymerisat und ebenfalls optional Talk, welche in einem speziellen Verfahren hergestellt werden, in denen die Brönsted-saure Verbindung vor der Compoundierung auf einen anorganischen oder organischen Adsorber bzw. Absorber, bevorzugt auf eine feinteilige Kieselsäure aufgezogen wird. Die offenbarten thermostabilisierten Polycarbonat-Zusammensetzungen werden in einem einschrittigen Compoundierungsverfahren hergestellt. Dabei können mechanische Pulvermischungen pulverförmiger Rezepturkomponenten zum Einsatz kommen.

Polycarbonat Formmassen und die daraus hergestellten Formkörpern enthalten in der Regel geringe Mengen an freiem, d.h. nicht chemisch gebundenem Bisphenol-A (BPA). Allerdings gibt es Bestrebungen, diese Gehalte an freiem BPA in den Formmassen und Artikeln regulatorisch eng zu beschränken mit dem Ziel, den Umwelteintrag von BPA zu minimieren. Dazu gibt es beispielweise Vorbereitungen in den entsprechenden Gremien der Europäischen Union.

Es hat sich gezeigt, dass anorganische Füllstoffe als Bestandteile der Polycarbonat-Formmasse zu einer Erhöhung des Gehalts an freiem BPA, insbesondere bei hohen Verarbeitungstemperaturen und langer Verweilzeit in der Schmelze, beitragen können und dass daher auch aus diesem Gesichtspunkt die Herstellung und Verarbeitung solcher Formmassen eine besondere Aufmerksamkeit erfordert.

Weiterhin können anorganische Füllstoffe zu einer Verschlechterung der mechanischen Daten der aus den Polycarbonat-Formmassen hergestellten Formkörpern führen. Insbesondere die Zähigkeit bei multiaxialer Belastung, wie sie beispielsweise in einem Durchstoßversuch geprüft wird, kann negativ beeinflusst werden.

Es war daher wünschenswert, eine mineralgefüllte Polycarbonat-Blend-Formmasse bereitzustellen, bei der die multiaxiale Zähigkeit verbessert ist. Bevorzugt sollten die Maximalkraft und Gesamtenergie gesteigert und dabei die Anzahl der Proben mit splitterndem Bruchversagen (Sprödbruch) reduziert werden. Letzteres ist beispielsweise für den Einsatz in sicherheitsrelevanten Anwendungen etwa im Automobilbereich von großer Wichtigkeit.

Weiterhin war es wünschenswert, ein Verfahren zur Herstellung einer mineralgefüllten Polycarbonat-Blend-Formmasse mit einem reduzierten Gehalt an BPA bereitzustellen.

WO 2008/122359 A1 offenbart talkgefüllte PC/ABS-Zusammensetzungen und daraus hergestellte Formmassen, welche durch Zusatz von Brönsted-Säuren gegenüber Polycarbonat-Abbau stabilisiert sind und dadurch eine verbesserte thermische Stabilität während der Compoundierung und Formgebung aufweisen. Über den Einfluss der Brönsted-Säuren auf den Gehalt an freiem BPA in solchen Formmassen und daraus hergestellten Formteilen schweigt diese Anmeldung.

WO 99/28386 A1 offenbart Formmassen enthaltend mindestens einen aromatischen oder teilaromatischen Polyester sowie mindestens ein Polycarbonat, mindestens ein Pfropfcopolymerisat, mindestens ein Copolymerisat enthaltend vinylaromatische Monomere, mindestens einen Füllstoff und mindestens eine niedermolekulare halogenfreie Säure. Als weitere optionale Komponenten in diesen Formmassen werden Polyacrylat, Flammschutzmittel und Polymeradditive offenbart. Die Formmassen zeichnen sich durch verbesserte mechanische Eigenschaften (Reißdehnung) und verbesserte Schmelzefließfähigkeit aus. Die Formmassen werden vorzugsweise durch Mischen aller Komponenten bei Temperaturen von 200 bis 320°C durch gemeinsames Extrudieren, also in einem einschrittigen Compoundierungsverfahren hergestellt. Weiterhin offenbart diese Anmeldung, dass einzelne Komponenten vorgemischt werden können. Über technische Effekte, die mit einer solchen Vormischung einzelner Komponenten erzielt werden können, schweigt die Anmeldung jedoch ebenso wie darüber, welche Komponenten der Zusammensetzung vorteilhaft vorgemischt werden bzw. auf welche Art und Weise und unter welchen Bedingungen diese Vormischung erfolgt.

WO 2018/037037 A1 offenbart Zusammensetzungen, erhalten durch Vermischen zumindest der Komponenten A) bis C), wobei A) Polycarbonat ist, B) unbeschlichteter Talk und C) mindestens ein anhydridmodifiziertes alpha-Olefin-Polymer mit einer Säurezahl von mindestens 30 mg KOH/g und einem mittleren Molekulargewicht $M_w$ von 4.000 bis 40.000 g/mol ist, wobei die Mengen von B) und C) vor der Vermischung so aufeinander abgestimmt sind, dass pro 10 Gewichtsteile der Komponente B) 0,10 bis 1,4 Gewichtsteile der Komponente C) eingesetzt werden und wobei die Zusammensetzung frei von Polyestern und Pfropfpolymerisaten ist. In diesen Zusammensetzungen weist das Polycarbonat eine verbesserte Stabilität gegenüber Zersetzung auf. Bei der Herstellung der Zusammensetzungen erfolgt eine Beschlichtung des Talks B) mit dem anhydridmodifizierten alpha-Olefin-Polymer C) in-situ während der Vermischung des Talks B) mit dem Polycarbonat A) in der Schmelze, das heißt das Polycarbonat A) liegt bei der Vermischung von Talk B) und alpha-Olefin-Polymer C) in der Schmelze zumindest teilweise, in bevorzugter Ausführungsform jedoch vollständig bereits vor.

US 2006/0287422 A1 offenbart thermoplastische Polycarbonat-Zusammensetzungen enthaltend einen mineralischen Füllstoff und eine bevorzugt anorganische Säure oder ein saures Salz einer bevorzugt anorganischen Säure sowie optional einen Schlagzähmodifikator und/oder ein Vinyl(co)polymer, wobei Füllstoff und Säure bzw. saures Salz in einem speziellen Verhältnis zum Einsatz kommen. Formmassen aus solchen Zusammensetzungen weisen verbesserte mechanische Eigenschaften und verbesserte thermische Stabilität des Polycarbonats gegenüber Molekulargewichtabbau auf. Die in der Anmeldung offenbarten Beispiele wurden sämtlich in einem offenbar als bevorzugt angesehenen Einschrittcompoundierungsverfahren in einem Doppelwellenextruder hergestellt.

Die US 2007/232739 A1 offenbart Zusammensetzungen enthaltend Polycarbonat umfassend Struktureinheiten abgeleitet von Bisphenol-A, Styrol-Acrylnitril-Copolymer, Methylmethacrylat-Butadien-Styrol-Copolymer, Talk und Additive.

Der beschriebene Stand der Technik liefert noch keine hinreichende Lösung für die oben genannten Aufgaben.

Es wurde nun aber gefunden, dass eine Formmasse enthaltend

A) mindestens ein Polycarbonat und/oder Polyestercarbonat, jeweils enthaltend Struktureinheiten abgeleitet von Bisphenol-A,
B) ein weiteres Polymer verschieden von Komponente A oder eine Mischung bestehend aus Polymeren jeweils verschieden von Komponente A,
wobei Komponente B besteht aus
B1) mindestens einem thermoplastischen Polymer und
optional B2) mindestens einem nicht thermoplastischen Polymer,
C) mindestens einen anorganischen Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, $AlO(OH)$, $Mg(OH)_2$ und Glimmer sowie Kombinationen der genannten Füllstoffe, wobei Komponente C bevorzugt Talk enthält,
D) optional mindestens ein nicht polymeres Polymeradditiv und/oder mindestens einen nicht polymeren Prozesshilfsstoff, jeweils verschieden von Komponente C,

wobei das Gewichtsverhältnis der Komponente B zur Komponente C mindestens 0,5, bevorzugt mindestens 1 und besonders bevorzugt mindestens 1,3 beträgt
und wobei der Gewichtsanteil der Komponente B1 in der Komponente B mindestens 20 %, bevorzugt mindestens 50 %, weiter bevorzugt mindestens 70 Gew.-% beträgt,
und wobei die Formmasse einen Massenanteil an freiem Bisphenol-A von weniger als 30 ppm, bevorzugt von weniger als 20 ppm und besonders bevorzugt von weniger als 10 ppm aufweist, mindestens eine der oben genannten Aufgaben löst.

Die als Komponente A im Rahmen dieser Erfindung zum Einsatz kommenden Polycarbonate und Polyestercarbonate werden im Weiteren synonym auch als aromatische Polycarbonate beziehungsweise aromatische Polyestercarbonate bezeichnet.

Die Komponente B ist bevorzugt ausgewählt aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren, besonders bevorzugt ausgewählt aus der Gruppe bestehend aus kautschukfreien Vinyl(co)polymeren und kautschukmodifizierten Vinyl(co)polymeren und Mischungen aus jeweils einem oder mehreren derartigen Polymeren.

Die Formmasse enthält bevorzugt

30 bis 85 Gew.-%, weiter bevorzugt 40 bis 80 Gew.-% und besonders bevorzugt 45 bis 75 Gew.-% der Komponente A,
2 bis 50 Gew.-%, weiter bevorzugt 7 bis 40 Gew.-% und besonders bevorzugt 15 bis 35 Gew.-% der Komponente B,
3 bis 40 Gew.-%, weiter bevorzugt 5 bis 30 Gew.-% und besonders bevorzugt 8 bis 25 Gew.-% der Komponente C,
0 bis 10 Gew.-%, weiter bevorzugt 0,1 bis 5 Gew.-% und besonders bevorzugt 0,2 bis 3 Gew.-% der Komponente D.

Diese genannten Gew.-% Angaben beziehen sich auf das Gesamtgewicht der thermoplastischen Formmasse.

Das Gewichtsverhältnis der Komponente B zur Komponente C beträgt bevorzugt 0,5 bis 5, bevorzugt 1 bis 3 und besonders bevorzugt 1,3 bis 2.

In einer weiteren bevorzugten Ausführungsform besteht die Formmasse zu mindestens 90 Gew.-%, weiter bevorzugt zu mindestens 95 Gew.-% und am meisten bevorzugt zu 100 Gew.-% aus den Komponenten A, B, C und D.

Es wurde ebenso gefunden, dass durch ein Verfahren zur Herstellung einer thermoplastischen Formmasse umfassend die Schritte

(i) Herstellen eines Masterbatches durch Schmelzecompoundierung folgender Komponenten in einem Innenkneter oder einem Co-Kneter:

B) ein Polymer verschieden von Polycarbonat enthaltend Struktureinheiten abgeleitet von Bisphenol-A und verschieden von Polyestercarbonat enthaltend Struktureinheiten abgeleitet von Bisphenol-A oder eine Mischung bestehend aus Polymeren verschieden von Polycarbonat enthaltend Struktureinheiten abgeleitet von Bisphenol-A und verschieden von Polyestercarbonat enthaltend Struktureinheiten abgeleitet von Bisphenol-A,
wobei Komponente B besteht aus
B1) mindestens einem thermoplastischen Polymer und
optional B2) mindestens einem nicht thermoplastischen Polymer,
C) mindestens ein anorganischer Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, $AlO(OH)$, $Mg(OH)_2$ und Glimmer sowie Kombinationen der genannten Füllstoffe, wobei Komponente C

bevorzugt Talk enthält, und

D) optional mindestens ein nicht polymeres Polymeradditiv und/oder mindestens ein nicht polymerer Prozesshilfsstoff, jeweils verschieden von Komponente C,

wobei das Gewichtsverhältnis der Komponente B zur Komponente C mindestens 0,5, bevorzugt mindestens 1 und besonders bevorzugt mindestens 1,3 beträgt,

und

wobei der Gewichtsanteil der Komponente B1 in der Komponente B mindestens 50 %, bevorzugt mindestens 60 Gew.-%, weiter bevorzugt mindestens 70 Gew.-%, beträgt,

und

(ii) Schmelzecompoundierung des in Schritt (i) erhaltenden Masterbatches mit mindestens einem Polycarbonat und/oder Polyestercarbonat, enthaltend Struktureinheiten abgeleitet von Bisphenol-A, als Komponente A sowie optional weiteren Anteilen der Komponenten B, C und/oder D und/oder der Gesamtmenge von Komponente D

eine Formmasse mit den gewünschten Eigenschaften erhalten wird.

Das Gewichtsverhältnis der Komponente B zur Komponente C beträgt in dem erfindungsgemäßen Verfahren bevorzugt 0,5 bis 5, weiter bevorzugt 1 bis 3 und besonders bevorzugt 1,3 bis 2.

Die Komponente B ist bevorzugt ausgewählt aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren, besonders bevorzugt ausgewählt aus der Gruppe bestehend aus kautschukfreien Vinyl(co)polymeren, kautschukmodifizierten Vinyl(co)polymeren und Mischungen aus jeweils einem oder mehreren derartigen Polymeren.

Im erfindungsgemäße Verfahren ist es also möglich, dass im Schritt (i) nur eine Teilmenge der insgesamt eingesetzten Menge der Komponente B und/oder der Komponente C und/oder der Komponente D eingesetzt wird. In diesem Fall wird die Restmenge der Komponente B und/oder der Komponente C und/oder der Komponente D im Schritt (ii) eingesetzt. Es ist auch möglich, die Komponente D vollständig im Schritt (ii) einzusetzen.

Bevorzugt wird in Schritt (i) mindestens 80 Gew.-%, weiter bevorzugt mindestens 90 Gew.-%, besonders bevorzugt mindestens 95 Gew.-% der Gesamtmenge der Komponente C eingesetzt. Am meisten bevorzugt wird die gesamte Menge der Komponente C in Schritt (i) eingesetzt.

Der Schritt (ii) wird bevorzugt durchgeführt in einem Compoundierungsaggregat ausgewählt aus der Gruppe bestehend aus Einwellenextrudern, gleichläufigen oder gegenläufigen Doppelwellenextrudern, Planetwalzenextrudern, Innenknetern oder Co-Knetern. Ein Co-Kneter ist ein kontinuierlich betriebener Kneter. Innenkneter werden in der Regel in Batch -Fahrweise, also diskontinuierlich, betrieben.

Der Co-Kneter wird bevorzugt so betrieben, dass gleichzeitig eine Rotation und axiales Hin- und Herbewegen der mischenden und knetenden Schneckenwelle erfolgt. Die oszillierende Schneckenwelle sorgt für einen intensiven Produktaustausch in axialer Richtung.

Die Schritte (i) und (ii) werden in einem Temperaturbereich von 200°C bis 350 °C durchgeführt mit einer Verweilzeit der Komponenten in der Schmelze im Bereich von 15 Sekunden bis 5 Minuten.

Besonders bevorzugt erfolgt der Verfahrensschritt (i) in einem Co-Kneter. Wenn Verfahrensschritt (i) in einem Co-Kneter durchgeführt wird, wird Schritt (i) bevorzugt bei einer Temperatur der Schmelze im Bereich von 210 bis 260 °C, weiter bevorzugt im Bereich von 215 bis 250 °C, besonders bevorzugt im Bereich von 220 bis 240 °C durchgeführt. Wenn Verfahrensschritt (i) in einem Co-Kneter durchgeführt wird, liegt die Verweilzeit der Komponenten in der Schmelze im Schritt (i) bevorzugt im Bereich von 1 bis 5 Minuten, weiter bevorzugt im Bereich 1,5 bis 4 Minuten, besonders bevorzugt im Bereich von 2 bis 3,5 Minuten.

Besonders bevorzugt wird der Verfahrensschritt (ii) in einem Doppelwellenextruder durchgeführt. Wenn Verfahrensschritt (ii) in einem Doppelwellenextruder durchgeführt wird, wird Schritt (ii) bevorzugt bei einer Temperatur der Schmelze im Bereich von 260 bis 320 °C durchgeführt. Wenn Verfahrensschritt (ii) in einem Doppelwellenextruder durchgeführt wird, liegt die Verweilzeit der Komponenten in der Schmelze im Schritt (ii) bevorzugt im Bereich von 15 bis 60 Sekunden.

In einem besonders bevorzugten Verfahren wird der Schritt (i) in einem Co-Kneter bei einer Temperatur der Schmelze im Bereich von 210 bis 260 °C und mit einer Verweilzeit der Komponenten in der Schmelze im Bereich von 1 bis 5 Minuten und der Schritt (ii) in einem Doppelwellenextruder bei einer Temperatur der Schmelze im Bereich von 260 bis 320 °C und mit einer Verweilzeit der Komponenten in der Schmelze im Bereich von 15 bis 60 Sekunden durchgeführt.

Sowohl im Schritt (i) als auch im Schritt (ii) kann auch ein Entgasen der vorliegenden Zusammensetzung durch Anlegen eines Unterdrucks erfolgen. Als Absolutdruck wird bevorzugt ein Druck von maximal 400 mbar, weiter bevorzugt von maximal 300 mbar, besonders bevorzugt von maximal 200 mbar eingestellt. Die Entgasung erfolgt bevorzugt im Schritt (ii).

Die für die Formmasse genannten Vorzugsbereiche für die Anteile der Komponenten A, B, C und D gelten auch für das erfindungsgemäße Verfahren. Dabei beziehen sich dann die Anteile auf die insgesamt eingesetzten Mengen, unabhängig davon, ob in Schritt (i) Teilmengen oder schon die Gesamtmengen der Komponenten B und D eingesetzt werden.

## Komponente A

Erfindungsgemäß geeignete Polycarbonate und/oder Polyestercarbonate gemäß Komponente A sind literaturbekannt oder nach literaturbekannten Verfahren herstellbar (zur Herstellung von Polycarbonaten siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung von Polyestercarbonaten, z. B. DE-A 3 007 934).

Die Herstellung erfindungsgemäß als Komponente A geeigneter Polycarbonate erfolgt z. B. durch Umsetzung von Bisphenol-A und optional weiteren Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Bisphenol-A und optional weiteren Diphenolen mit beispielsweise Diphenylcarbonat möglich.

Neben Bisphenol-A zur Herstellung der erfindungsgemäß als Komponente A geeigneten Polycarbonate und/oder zur Herstellung der erfindungsgemäß als Komponente A geeigneten Polyestercarbonate geeignete Diphenole sind vorzugsweise solche der Formel (I)

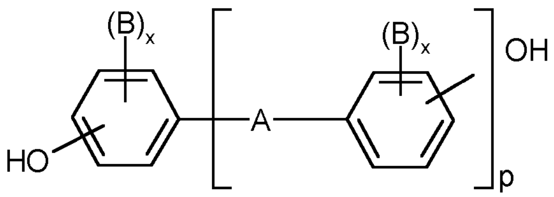

(I),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

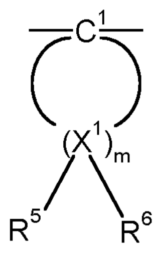

(II)

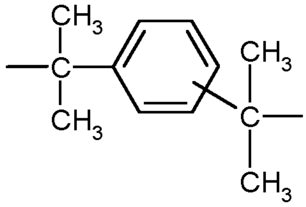

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte neben Bisphenol-A zum Einsatz kommende Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte weitere Diphenole sind 4,4'-Dihydroxydiphenyl, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Es können diese Diphenole einzeln oder als beliebige Mischungen eingesetzt werden. Die Diphenole sind literaturbekannt oder nach literaturbekannten Verfahren erhältlich.

Die erfindungsgemäß zum Einsatz kommenden Polycarbonate enthalten bevorzugt mindestens 20 Gew.-%, weiter bevorzugt mindestens 50 Gew.-%, besonders bevorzugt mindestens 80 Gew.-%, am meisten bevorzugt 100 Gew.-%, jeweils bezogen auf die Summe aller von Bisphenolen abgeleiteten Struktureinheiten, solche von Bisphenol-A abgeleitete Struktureinheiten

Für die Herstellung der Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$) von bevorzugt 20000 bis 40000 g/mol, weiter bevorzugt 24000 bis 32000 g/mol, besonders bevorzugt 26000 bis 30000 g/mol, gemessen durch GPC (Gelpermeationschromatographie) unter Verwendung von Dichlormethan als Lösungsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 $\mu$m bis 20 $\mu$m. Konzentration der Lösungen: 0,2 Gew.-%. Flussrate: 1,0 ml/min, Temperatur der Lösungen: 30°C. Verwendung einer UV- und/oder RI-Detektion.

Durch die bevorzugten Bereiche wird in den erfindungsgemäßen Zusammensetzungen eine besonders vorteilhafte Balance aus mechanischen und rheologischen Eigenschaften erreicht.

Die Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind polydiorganosiloxanhaltige Copolycarbonate; die Herstellung der polydiorganosiloxanhaltiger Copolycarbonate ist beispielsweise in der DE-A 3 334 782 beschrieben.

Aromatische Dicarbonsäuredihalogenide zur Herstellung von Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der Polyestercarbonate kommen außer den bereits genannten Monophenolen noch deren Chlorkohlensäureester sowie die Säurechloride von aromatischen Monocarbonsäuren, die gege-

benenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von Polyestercarbonaten kann zusätzlich eine oder mehrere aromatische Hydroxycarbonsäure eingesetzt werden.

Die Polyestercarbonate können sowohl linear als auch in bekannter Weise verzweigt sein (siehe dazu DE-A 2 940 024 und DE-A 3 007 934), wobei lineare Polyestercarbonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den Polyestercarbonaten kann der Anteil an Carbonatstruktureinheiten beliebig variieren. Vorzugsweise beträgt der Anteil an Carbonatgruppen bis zu 90 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der Polyestercarbonate kann in Form von Blöcken oder statistisch verteilt im Polykondensat vorliegen.

Die Polycarbonate und Polyestercarbonate können allein oder im beliebigen Gemisch eingesetzt werden.

Bevorzugt wird als Komponente A lineares Polycarbonat auf Basis von ausschließlich Bisphenol A eingesetzt.

**Komponente B**

Als Komponente B enthält die erfindungsgemäße Formmasse mindestens ein weiteres Polymer verschieden von Komponente A oder eine Mischung bestehend aus Polymeren jeweils verschieden von Komponente A,

wobei Komponente B besteht aus
B1) mindestens einem thermoplastischen Polymer und
optional B2) mindestens einem nicht thermoplastischen Polymer
und wobei der Gewichtsanteil der Komponente B1 in der Komponente B mindestens 20 %, bevorzugt mindestens 50 %, weiter bevorzugt mindestens 70 Gew.-% beträgt.

Eine Mischung von Polymeren kann dabei bedeuten, dass die entsprechenden Granulate oder Pulver aus den Polymeren möglichst homogen ineinander verteilt vorliegen. Das kann erreicht werden, indem die Granulate oder Pulver in geeignete Mischapparaturen oder Behältnisse eingefüllt werden und durch z.B. Schütteln oder Rühren bei Raumtemperatur, bei erhöhter Temperatur oder alternativ auch unter Kühlung eine Vermischung erreicht wird, ohne dass notwendigerweise ein Aufschmelzen einer oder mehrerer Polymere erfolgt.

Eine Mischung von Polymeren kann auch ein durch Aufschmelzen eines oder mehrerer Polymere durch Einbringen thermischer oder mechanischer Energie und Vermischen der Polymere in der Schmelze erhaltenes Compound (Polymerblend) bedeuten. Das Aufschmelzen und Vermischen kann dabei beispielsweise in einem Extruder oder Kneter erfolgen.

Bei zahlreichen kommerziell erhältlichen thermoplastisch verarbeitbaren Materialien handelt es sich um durch Schmelzecompoundierung erhaltene Mischungen aus thermoplastischen und nicht thermoplastischen Polymeren. Dies ist beispielsweise bei vielen kommerziell verfügbaren ABS (Acrylnitril-Butadien-Styrol) - Kunststoffen für Spritzguss- oder Extrusionsanwendungen der Fall, welche technisch oft erhalten werden durch Compoundierung von thermoplastischen Styrol-Acrylnitril-Copolymeren (SAN) mit nicht thermoplastischen Emulsions-ABS Pfropfpolymeren.

Die Komponente B ist bevorzugt ausgewählt aus der Gruppe bestehend aus kautschukfreien Vinyl(co)polymeren, kautschukmodifizierten Vinyl(co)polymeren, Polyolefinen, Polyamiden, Polyestern, von Komponente A verschiedenen Polycarbonaten und Hochtemperaturpolymeren wie beispielsweise Polysulfone, Polyimide, Polyphenylene, Polyaryle, Polyetherketone, Polyphenylensulfide und Mischungen aus jeweils einem oder mehreren derartigen Polymeren, weiter bevorzugt ausgewählt aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren, am meisten bevorzugt ausgewählt aus der Gruppe bestehend aus kautschukfreien Vinyl(co)polymeren,

kautschukmodifizierten Vinyl(co)polymeren und Mischungen aus jeweils einem oder mehreren derartigen Polymeren.

Als Komponente B in Frage kommende Polyolefine werden durch Kettenpolymerisation, bevorzugt durch radikalische Polymerisation, hergestellt. Als Monomere werden Alkene eingesetzt. Eine alternative Bezeichung für Alkene ist Olefine. Die Monomere können einzeln oder als Mischung verschiedener Monomere polymerisiert werden.

Bevorzugte Monomere sind Ethylen, Propylen, 1-Buten, Isobuten 1-Penten, 1-Hepten, 1-Okten und 4-Methyl-1-Penten.

Die Polyolefine können bis zu 50 Gew.-%, weiter bevorzugt bis zu 30 Gew.-% vinylische Comonomere enthalten, beispielsweise Methylacrylat, Ethylacrylat, Butylacrylat und Methylmethacrylat.

Die Polyolefine sind teilkristallin oder amorph und können linear oder verzweigt sein. Die Herstellung von Polyolefinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

Als Komponente B oder Bestandteil der Komponente B können auch kautschukmodifizierte Vinyl(co)polymerisate oder kautschukfreie Vinyl(Co)Polymerisate oder eine Mischung mehrerer solcher Polymerisate eingesetzt werden.

Bei den kautschukmodifizierten Vinyl(co)polymerisaten handelt es sich bevorzugt um kautschukmodifizierte Pfropfpolymerisate. Diese können in Abhängigkeit von ihrem Kautschukgehalt sowohl thermoplastisch (gemäß Komponente B1) als auch nicht thermoplastisch (gemäß Komponente B2) sein. Üblicherweise sind kautschukmodifizierte Pfropfpolymerisate mit einem Kautschukgehalt von größer als 40 Gew.-% alleine, das heißt ohne Zusatz weiterer Polymere, beispielsweise weiterer Teilkomponenten B, welche sich thermoplastisch verarbeiten lassen, beispielsweise kautschukfreier oder kautschukarmer Teilkomponenten B, im Allgemeinen nicht mehr thermoplastisch verarbeitbar.

Kommt in dem Verfahrensschritt (i) als Komponente B oder als Teil der Komponente B eine Präcompound aus mindestens einem thermoplastischen Polymer gemäß Komponente B1 und mindestens einem nicht thermoplastischen Polymer gemäß Komponente B2 zum Einsatz, beispielsweise ein Präcompound aus einem oder mehreren kautschukfreien oder kautschukarmen Vinyl(co)polymerisaten und einem oder mehreren kautschukmodifizierten Pfropfpolymerisaten mit jeweiligen Kautschukgehalten von größer als 40 Gew.-%, so ist bei der Berechnung des Gewichtsanteils der Komponente B1 in der Komponente B in der erfindungsgemäßen Zusammensetzung nur der entsprechende Mengenanteil von B1 in dem Präcompound als thermoplastisches Polymer B1 zu berücksichtigen, auch dann, wenn der Präcompound also solches selbst thermoplastisch ist.

Die kautschukmodifizierten Pfropfpolymerisate können beispielsweise eine Kern-Schale-Struktur aufweisen. Derartige kautschukmodifizierten Pfropfpolymerisate mit Kern-Schale-Struktur werden üblicherweise in Emulsions-Polymerisation hergestellt und weisen in der Regel einen Kautschukgehalt im Bereich von 20 bis 90 Gew.-%, bevorzugt 30 bis 85 Gew.-%, weiter bevorzugt 40 bis 80 Gew.-% auf. Aufgrund ihres hohen Kautschukgehalts sind derartige kautschukmodifizierten Pfropfpolymerisate mit Kern-Schale-Struktur, insbesondere solche mit einem Kautschukgehalt von größer als 40 Gew.-% oft nicht hinreichend gut thermoplastisch verarbeitbar und eignen sich insofern im Rahmen dieser Erfindung im Allgemeinen nicht als alleinige Komponente B bei der Herstellung des Masterbatches in dem erfindungsgemäßen Verfahrensschritt (i). Als Bestandteil der Komponente B können sie in einem Massenanteil von bis zu 50 Gew.-%, bevorzugt bis zu 40 Gew.-%, weiter bevorzugt bis zu 30 Gew.-%, jeweils bezogen auf die Komponente B, bei der Herstellung des Masterbatches aber zum Einsatz kommen. Sollen in den erfindungsgemäßen Polycarbonat-Blend-Zusammensetzungen höhere also die zuvor genannten Einsatzmengen an kautschukmodifizierten Pfropfpolymerisaten mit Kern-Schale-Struktur, bezogen auf die Komponente B, zum Einsatz kommen, so können diese Mehrmengen im Verfahrensschritt (ii) des erfindungsgemäßen Herstellverfahrens zugesetzt werden.

Weitere erfindungsgemäß geeignete kautschukmodifizierte Pfropfpolymerisate sind solche, welche herstellungsbedingt eine disperse Phase aus mit Vinyl(co)polymerisat gepfropften Kautschukpartikeln enthaltend Inklusionen aus Vinyl(co)polymerisat eingebettet in eine Vinyl(co)polymerisat-Matrix enthalten. Derartige kautschukmodifizierte Pfropfpolymerisate können durch Masse-Polymerisation erhalten werden.

Als Komponente B zum Einsatz kommende kautschukmodifizierte Vinyl(co)polymerisate umfassen

5 bis 95, vorzugsweise 15 bis 92, insbesondere 20 bis 60 Gew.-%, bezogen auf das kautschukmodifizierte Vinyl(co) polymerisat, wenigstens eines Vinylmonomeren als Pfropfauflage (Pfropfhülle) auf

95 bis 5, vorzugsweise 85 bis 8, insbesondere 80 bis 40 Gew.-%, bezogen auf das kautschukmodifizierte Vinyl(co) polymerisate, einer oder mehrerer kautschukartiger Pfropfgrundlagen, vorzugsweise mit Glasübergangstemperaturen < 10°C, weiter bevorzugt < 0°C, besonders bevorzugt < -20°C.

Die Glasübergangstemperatur wird mittels dynamischer Differenzkalorimetrie (DSC) gemäß der Norm DIN EN

61006 bei einer Heizrate von 10 K/min mit Definition der $T_g$ als Mittelpunkttemperatur (Tangentenmethode) bestimmt.

Die Pfropfgrundlage hat im allgemeinen eine mittlere Teilchengröße ($d_{50}$-Wert) von 0,05 bis 10 μm, vorzugsweise 0,1 bis 5 μm, besonders bevorzugt 0,2 bis 1 μm.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Vinylmonomere zur Herstellung der kautschukmodifizierte Vinyl(co)polymerisate sind vorzugsweise Gemische aus

50 bis 99, bevorzugt 60 bis 80, insbesondere 70 bis 80 Gew.-Teile, bezogen auf die Pfropfauflage, Vinylaromaten und/oder kernsubstituierten Vinylaromaten (wie Styrol, α -Methylstyrol, p-Methylstyrol, p-Chlorstyrol) und/oder Methacrylsäure-($C_1$-$C_8$)-Alkylester, wie Methylmethacrylat, Ethylmethacrylat), bevorzugt ausgewählt aus mindestens einem der Monomere Styrol, α-Methylstyrol und Methylmethacrylat, besonders bevorzugt Styrol und

1 bis 50, bevorzugt 20 bis 40, insbesondere 20 bis 30 Gew.-Teilen, bezogen auf die Pfropfauflage, Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid, bevorzugt ausgewählt aus mindestens einem der Monomere Acrylnitril, Maleinsäureanhydrid und Methylmethacrylat, besonders bevorzugt Acrylnitril..

In einer weiteren bevorzugten Ausführungsform besteht die Pfropfauflage aus Methylmethacrylat.

Für die kautschukmodifizierten Vinyl(co)polymerisate geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. den Vinylpolymeren, die auch für die Pfropfauflage zum Einsatz kommen).

Besonders bevorzugt als Pfropfgrundlage ist reiner Polybutadienkautschuk.

Besonders bevorzugte kautschukmodifizierte Vinyl(co)polymerisate sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die kautschukmodifizierte Vinyl(co)polymerisate werden durch radikalische Polymerisation, z.B. durch Emulsions-, Suspensions-, Lösungs- oder Massepolymerisation, vorzugsweise durch Emulsions- oder Massepolymerisation, hergestellt.

Der Gelanteil der Pfropfgrundlage beträgt mindestens 30 Gew.-%, vorzugsweise mindestens 40 Gew.-%, insbesondere mindestens 60 Gew.-%, gemessen als unlöslicher Anteil in Toluol.

Der Gelgehalt der Pfropfgrundlage wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co) Polymerisat der Pfropfmonomere enthalten.

Als Pfropfgrundlage geeignete Acrylatkautschuke sind vorzugsweise Polymerisate aus Acrylsäurealkylestern, gegebenenfalls mit bis zu 40 Gew.-%, bezogen auf die Pfropfgrundlage, anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Weitere geeignete Pfropfgrundlagen gemäß sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Bei den kautschukfreien Vinyl(Co)Polymerisaten handelt es sich vorzugsweise um kautschukfreie Homo- und/oder Copolymerisate von mindestens einem Monomeren aus der Gruppe der Vinylaromaten, Vinylcyanide (ungesättigte Nitrile), (Meth)Acrylsäure-($C_1$ bis $C_8$)-Alkylester, ungesättigten Carbonsäuren sowie Derivaten (wie Anhydride und Imide) ungesättigter Carbonsäuren.

Insbesondere geeignet sind kautschukfreie Vinyl(Co)Polymerisate aus

50 bis 99 Gew.-%, bevorzugt 60 bis 80 Gew.-%, insbesondere 70 bis 80 Gew.-%, jeweils bezogen auf das Gesamtgewicht des kautschukfreien Vinyl(Co)Polymerisats , mindestens eines Monomeren ausgewählt aus der Gruppe der Vinylaromaten, wie beispielsweise Styrol, α-Methylstyrol, kernsubstituierten Vinylaromaten, wie beispielsweise p-Methylstyrol, p-Chlorstyrol, und (Meth)Acrylsäure-($C_1$-$C_8$)-Alkylester, wie beispielsweise Methylmethacrylat, n-Butylacrylat, tert.-Butylacrylat, und

1 bis 50 Gew.-%, bevorzugt 20 bis 40 Gew.-%, insbesondere 20 bis 30 Gew.-%, jeweils bezogen auf das Gesamtgewicht des kautschukfreien Vinyl(Co)Polymerisats, mindestens eines Monomeren ausgewählt aus der Gruppe der Vinylcyanide, wie beispielsweise ungesättigte Nitrile wie z.B. Acrylnitril und Methacrylnitril, (Meth)Acrylsäure-($C_1$-$C_8$)-Alkylester, wie beispielsweise Methylmethacrylat, n-Butylacrylat, tert.-Butylacrylat, ungesättigte Carbonsäuren und Derivate ungesättigter Carbonsäuren, wie beispielsweise Maleinsäureanhydrid und N-Phenyl-Maleinimid.

Diese kautschukfreien Vinyl(Co)Polymerisate sind harzartig und thermoplastisch. Besonders bevorzugt ist das Copolymerisat aus Styrol und Acrylnitril.

Derartige kautschukfreie Vinyl(Co)Polymerisate sind bekannt und lassen sich durch radikalische Polymerisation, insbesondere durch Emulsions-, Suspensions-, Lösungs- oder Massepolymerisation herstellen. Die kautschukfreien Vinyl(Co)Polymerisate besitzen vorzugsweise mittlere Molekulargewichte $M_w$ (Gewichtsmittel, ermittelt durch GPC mit Polystyrol als Standard) zwischen 15.000 und 250.000 g/mol, bevorzugt im Bereich 80.000 bis 150.000 g/mol

Als Komponente B in Frage kommende aromatische Polyester sind in bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte. Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die aromatischen Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Am meisten bevorzugt werden als Komponente B Copolymerisate aus Styrol und Acrylnitril (SAN), ABS-Copolymerisate oder Mischungen enthaltend ABS und/oder SAN eingesetzt, optional in Kombination mit weiteren kautschukmodifizierten Vinyl(co)polymerisaten, bevorzugt in Kombination mit Pfropfpolymerisaten mit Kern-Schale-Struktur.

## Komponente C

Die Zusammensetzung enthält als Komponente C bevorzugt mindestens einen anorganischen Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, AlO(OH), $Mg(OH)_2$ und Glimmersowie Kombinationen der genannten Füllstoffe . Bevorzugte Zusammensetzungen enthalten als einen Bestandteil der Komponente C Talk. In besonders bevorzugten Zusammensetzungen kommt als Komponente C neben optional zur Einfärbung verwendeten anorganischen Pigmenten ausschließlich Talk zum Einsatz.

Geeignete Quarzverbindungen sind beispielsweise solche, die zu über 97 Gew.-% auf Siliciumdioxid (Quarz) aufgebaut sind. Die Korngestalt ist dabei sphärisch und/oder annähernd sphärisch.

In einer bevorzugten Ausführungsform kommen Quarze zum Einsatz, die eine Beschichtung mit Siliciumorganischen Verbindungen haben, wobei bevorzugt Epoxysilan-, Methylsiloxan- und/oder Methacrylsilan-Schlichten zum Einsatz kommen. Besonders bevorzugt ist eine Epoxysilanschlichte. Die Beschlichtung von anorganischen Füllstoffen erfolgt nach den allgemeinen, dem Fachmann bekannten Verfahren.

Bei den Quarzverbindungen handelt es sich bevorzugt um feinteilige (amorphe) Quarzgutmehle, die durch eisenfreie Mahlung mit nachfolgender Windsichtung aus elektrisch erschmolzenem Siliciumdioxid hergestellt werden. Ebenso ist es möglich, Quarzmehle hergestellt aus aufbereitetem Quarzsand zu verwenden.

Kommerziell verfügbare Quarzgutmehle sind beispielsweise Amosil™ FW600 oder Amosil™ FW600 der Firma Quarzwerke GmbH (Deutschland). Kommerziell verfügbare Quarzmehle sind beispielsweise Sikron™ SF300, Sikron™ SF600, Sikron™ SF800, Silbond™ SF600 EST der Firma Quarzwerke GmbH (Deutschland) oder Mikro-Dorsilit™ 120 der Firma QUARZSANDE GmbH (Österreich).

Bevorzugte anorganische Füllstoffe sind mineralische Füllstoffe auf Basis von Talk. Als mineralische Füllstoffe auf Basis von Talk im Sinne der Erfindung kommen alle Füllstoffe infrage, die der Fachmann mit Talk bzw. Talkum verbindet. Ebenfalls kommen alle Füllstoffe, die kommerziell angeboten werden und deren Produktbeschreibungen als charakterisierende Merkmale die Begriffe Talk bzw. Talkum enthalten, in Frage. Im Rahmen der vorliegenden Erfindung werden mineralische Füllstoffe auf Basis von Talk auch einfach als Talk bezeichnet.

Es können auch Mischungen verschiedener mineralischer Füllstoffe auf Basis von Talk zum Einsatz kommen.

Erfindungsgemäß sind mineralische Füllstoffe bevorzugt, die einen Gehalt an Talk nach DIN 55920 (Version von 2006) von größer 80 Gew.-%, bevorzugt größer 95 Gew.-% und besonders bevorzugt größer 98 Gew.-%, bezogen auf die Gesamtmasse an Füllstoff aufweisen.

Unter Talk wird ein natürlich vorkommender oder synthetisch hergestellter Talk verstanden.

Bei reinem Talk handelt sich um ein Silikat mit Schichtstruktur.

Die als Komponente C zum Einsatz kommende Talksorten zeichnen sich bevorzugt aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%. Die besonders bevorzugten Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße $d_{50}$ von 0,2 bis 10 $\mu$m, bevorzugt 0,5 bis 5 $\mu$m, weiter bevorzugt 0,7 bis 2,5 $\mu$m und besonders bevorzugt 1,0 bis 2,0 $\mu$m.

Die mittlere Teilchengröße $d_{50}$ ist der Durchmesser, oberhalb und unterhalb dessen jeweils 50 Gew.-% der Teilchen liegen. Es können auch Mischungen von Talk-Typen eingesetzt werden, die sich in ihrer mittleren Teilchengröße $d_{50}$ unterscheiden.

Die erfindungsgemäß einzusetzenden Talktypen haben bevorzugt eine obere Teilchen- bzw. Korngröße $d_{97}$ kleiner 50 $\mu$m, bevorzugt kleiner 10 $\mu$m, besonders bevorzugt kleiner 6 $\mu$m und insbesondere bevorzugt kleiner 2,5 $\mu$m.

Die $d_{97}$- und $d_{50}$-Werte der Komponente C, werden - soweit nicht anders angegeben - nach Sedimentationsanalyse mit Sedigraph 5100 (Micromeritics GmbH, Erftstrasse 43, 41238 Mönchengladbach, Deutschland) nach ISO 13317-1 und ISO 13317-3 (Version von 2000) bestimmt.

Der Talk kann oberflächenbehandelt, z.B. silanisiert sein, um eine bessere Verträglichkeit mit dem Polymer zu gewährleisten. Der Talk kann beispielsweise mit einem Haftvermittlersystem auf Basis funktionalisierter Silane ausgerüstet sein.

Im Hinblick auf die Verarbeitung und Herstellung der Formmassen ist auch der Einsatz eines kompaktierten Talks vorteilhaft.

Der eingesetzte Talk kann bedingt durch die Verarbeitung zur Formmasse bzw. zu Formkörpern in der Formmasse bzw. im Formkörper einen kleineren $d_{97}$- bzw. $d_{50}$-Wert aufweisen, als in der ursprünglich eingesetzten Form.

Als Komponente B kann auch Kaolin, bevorzugt ein oberflächenbehandeltes, kalziniertes Kaolin eingesetzt werden.

Der Hauptbestandteil des natürlich vorkommenden Kaolins ist der Kaolinit, Al2(OH)4[Si2O5], Nebenbestandteile sind Feldspäte, Glimmer und Quarz. Neben dieser Zusammensetzung können auch Kaoline verwendet werden, die anstelle von oder neben Kaolinit auch Nakrit, Dickit, Halloysit und hydratisiertes Halloysit enthalten.

Das erfindungsgemäße kalzinierte Kaolin wird erhalten durch Wärmebehandlung eines Kaolins bei mindestens 500°C, vorzugsweise von 850°C bis 1100°C. Die Hydroxylgruppen, die einen Teil der Kristallstruktur des Kaolins bilden, gehen während dieser Wärmebehandlung verloren und das Kaolin geht in kalziniertes Kaolin über.

Weiterhin können erfindungsgemäß auch Wollastonite eingesetzt werden. Diese besitzen vorzugsweise einen Kohlenstoffgehalt bezogen auf den Wollastoniten von größer 0,1 Gew.-%, vorzugsweise 0,2 bis 2 Gew.-%, besonders bevorzugt 0,3 bis 1 Gew.-%, ganz besonders bevorzugt 0,3 bis 0,6 Gew.-%, bestimmt nach Elementaranalyse. Solche Wollastonite sind käuflich erhältlich, beispielsweise unter dem Handelsnamen Nyglos™ der Firma NYCO Minerals Inc. Willsboro, NY, USA und den Typenbezeichnungen Nyglos™ 4-10992 oder Nyglos™ 5-10992.

Bevorzugte Wollastonite haben ein mittleres Aspekt-Verhältnis, also ein Verhältnis der mittleren Länge der Faser zum mittleren Durchmesser, von >6, insbesondere ≥7 und einen mittleren Faserdurchmesser von 1 bis 15 μm, bevorzugt 2 bis 10 μm, insbesondere von 4 bis 8 μm.

Ein weiterer geeigneter Füllstoff ist Calciumcarbonat $CaCO_3$. Calciumcarbonat kommt natürlich vor in Form von Mineralien wie Calcit, Aragonit und Vaterit sowie als Hauptbestandteil von Kalkstein, Kreide und Marmor. Calciumcarbonat kann auch synthetisch hergestellt werden, was aufgrund der höheren Reinheit vorteilhaft sein kann. Bevorzugt wird Calciumcarbonat mit einem mittleren Teilchendurchmesser $d_{50}$ von 0,1 bis 5 μm eingesetzt.

Ein weiterer geeigneter Füllstoff ist Aluminiumhydroxid $Al(OH)_3$. Aluminiumhydroxid kommt natürlich vor in Form von Mineralien wie Gibbsit, Bayerit und Nordstandit. Aluminiumhydroxid kann auch synthetisch hergestellt werden, was aufgrund der höheren Reinheit vorteilhaft sein kann. Bevorzugt wird Calciumcarbonat mit einem mittleren Teilchendurchmesser $d_{50}$ von 1 bis 5 μm eingesetzt.

Ein weiterer geeigneter Füllstoff ist Glimmer, bevorzugt Metalloxid-beschichteten Glimmer. Der Glimmer kann natürlich vorkommender oder synthetisch hergestellter Glimmer sein, wobei letzterer aufgrund der üblicherweise höheren Reinheit bevorzugt ist. Glimmer, der aus der Natur gewonnen wird, ist üblicherweise von weiteren Mineralien begleitet. Komponente B "Glimmer" bei aus der Natur gewonnenem Glimmer umfasst mit der angegebenen Menge auch entsprechende Verunreinigungen. Der Glimmer ist vorzugsweise Muskovit-basiert, d.h. er umfasst bevorzugt mindestens 60 Gew.-%, weiter bevorzugt mindestens 70 Gew.-%, noch weiter bevorzugt mindestens 85 Gew.-%, besonders bevorzugt mindestens 90 Gew. % Muskovit, bezogen auf das Gesamtgewicht des Glimmeranteils.

Die Metalloxid-Beschichtung umfasst vorzugsweise eine oder mehrere Beschichtungsschichten, enthaltend Titandioxid, Zinnoxid, Aluminiumoxid und/oder Eisenoxid, wobei das Metalloxid weiter bevorzugt Eisen(III)-oxid (Fe2O3), Eisen(II, III)-oxid (Fe3O4, eine Mischung aus Fe2O3 und FeO) und/oder Titandioxid ist, besonders bevorzugt Titandioxid.

Die mittlere Partikelgröße ($d_{50}$) des Pigments, bestimmt mittels Laserdiffraktometrie an einer wässrigen Aufschlämmung des Pigments, beträgt bevorzugt 1 bis 100 μm, bei synthetischem Glimmer weiter bevorzugt 5 bis 80 μm und bei natürlichem Glimmer weiter bevorzugt 3 bis 30 μm, generell bei Glimmer besonders bevorzugt 3,5 bis 15 μm, ganz besonders bevorzugt 4,0 bis 10 μm, äußerst bevorzugt 4,5 bis 8,0 μm.

Kommerziell verfügbare geeignete Glimmer sind beispielsweise Produkte der Produktgruppe Tremica™ der Firma HPF Minerals (Quarzwerke Gruppe, Deutschland).

Als Komponente C können bevorzugt auch ein oder mehrere Pigmente auf Basis von Titandioxid, optional in Kombination mit anderen anorganischen Pigmenten wie beispielsweise Eisenoxid, Aquamarin, Ultramarin blau, Zinkweiß und Zinkoxid eingesetzt werden.

Es handelt sich um natürlich vorkommende, synthetisch hergestellte oder modifizierte natürlich vorkommende Pigmente oder Mischungen daraus. Die Titandioxid-Pigmente weisen bevorzugt eine der Kristallstrukturmodifikation von Rutil, Anatas oder Brookit auf. Die bevorzugte Modifikation ist Rutil.

Erfindungsgemäße Pigmente auf Basis von Titandioxid haben ein Dichte (gemäß DIN EN ISO 787-10) von 3,6 bis 4,4 g/cm$^3$, bevorzugt von 3,8 bis 4,3 g/cm$^3$, besonders bevorzugt von 4,0 bis 4,2 g/cm$^3$.

Die Pigmente können in bekannter Weise nach dem Sulfat-Verfahren oder dem Chlorid-Verfahren aus natürlichen Rohstoffen wie Ilmenit, Rutil-Erz oder $TiO_2$-Schlacke gewonnen werden.

Die Pigmente können eine anorganische und/oder organische Oberflächenmodifizierung aufweisen, bevorzugt auf Basis von Aluminium- und/oder Polysiloxan-Verbindungen. Der Anteil an Titandioxid (gemäß DIN EN ISO 591) ist bevorzugt > 90 Gew.-%, besonders bevorzugt > 92 Gew.-%, weiter bevorzugt > 95 Gew.-%.

In bevorzugter Ausführungsform weisen die Pigmente eine Ölabsorption (gemäß ISO787-5) von 5 bis 50 g / 100 g Pigment, weiter bevorzugt von 10 bis 25 g / 100 g Pigment und besonders bevorzugt von 12 bis 18 g / 100 g Pigment.

**Komponente D**

Als Komponente D können eine oder mehrere nicht polymere Polymeradditive und/oder nicht polymere Prozesshilfsstoffe, welche verschieden von Komponente C sind, in der Zusammensetzung enthalten sein, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, organischen Füll- und Verstärkungsstoffen sowie organischen Farbstoffen und Pigmenten.

Als Gleit-und Entformungsmittel werden in bevorzugter Ausführungsform Fettsäureester, besonders bevorzugt Fettsäureester des Pentaerythrits oder Glycerins, eingesetzt.

In bevorzugter Ausführungsform wird als Stabilisator mindestens ein Vertreter ausgewählt aus der Gruppe bestehend aus sterisch gehinderten Phenolen, organischen Phosphiten und Schwefelbasierten Co-Stabilisatoren eingesetzt.

In besonders bevorzugter Ausführungsform wird als Stabilisator mindestens ein Vertreter ausgewählt aus der Gruppe bestehend aus Octadecyl-3-(3,5-di-tert-butyl-4-hydroxyphenyl)propionat und Tris(2,4-di-tert-butylphenyl)phosphit eingesetzt.

**Verfahren zur Herstellung der Formmassen**

Aus den erfindungsgemäßen Komponenten A, B und C sowie optional D werden im erfindungsgemäßen Verfahren thermoplastische Formmassen mit einem niedrigen Massegehalt an freiem BPA hergestellt.

Unter Formmasse wird das Produkt verstanden, das erhaltend wird, wenn die Bestandteile der Zusammensetzung schmelzcompoundiert und schmelzextrudiert werden.

Ein Gegenstand der Erfindung ist auch ein entsprechendes Verfahren zur Herstellung der erfindungsgemäßen Formmassen wie oben beschrieben.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Insbesondere sind die folgenden Ausführungsformen bevorzugt:

1. Thermoplastische Formmasse enthaltend

A) mindestens ein Polycarbonat und/oder Polyestercarbonat, jeweils enthaltend Struktureinheiten abgeleitet von Bisphenol-A,
B) ein weiteres Polymer verschieden von Komponente A oder eine Mischung bestehend aus Polymeren jeweils verschieden von Komponente A,
wobei Komponente B besteht aus
B1) mindestens einem thermoplastischen Polymer und
optional B2) mindestens einem nicht thermoplastischen Polymer,
C) mindestens einen anorganischen Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, AlO(OH), $Mg(OH)_2$ und Glimmer sowie Kombinationen der genannten Füllstoffe und
D) optional mindestens ein nicht polymeres Polymeradditiv und/oder mindestens einen nicht polymeren Prozesshilfsstoff, jeweils verschieden von Komponente C,
wobei das Gewichtsverhältnis der Komponente B zur Komponente C mindestens 0,5 beträgt und wobei der Gewichtsanteil der Komponente B1 in der Komponente B mindestens 20 % beträgt
und wobei die Formmasse einen Massenanteil an freiem Bisphenol-A von weniger als 30 ppm aufweist.

2. Formmasse gemäß Ausführungsform 1, wobei das Gewichtsverhältnis der Komponente B zur Komponente C mindestens 1 beträgt.
3. Formmasse gemäß Ausführungsform 1, wobei das Gewichtsverhältnis der Komponente B zur Komponente C

mindestens 1,3 beträgt.

4. Formmasse gemäß einer der vorhergehenden Ausführungsformen enthaltend

30 bis 85 Gew.-% der Komponente A,
2 bis 50 Gew.-% der Komponente B,
3 bis 40 Gew.-%, der Komponente C,
0 bis 10 Gew.-%, der Komponente D.

5. Formmasse gemäß einer der vorhergehenden Ausführungsformen enthaltend

40 bis 80 Gew.-% der Komponente A,
7 bis 40 Gew.-% der Komponente B,
5 bis 30 Gew.-%, der Komponente C,
0,1 bis 5 Gew.-%, der Komponente D.

6. Formmasse gemäß einer der vorhergehenden Ausführungsformen enthaltend

45 bis 75 Gew.-% der Komponente A,
15 bis 35 Gew.-% der Komponente B,
8 bis 25 Gew.-%, der Komponente C,
0,2 bis 3 Gew.-%, der Komponente D.

7. Formmasse gemäß einer der vorhergehenden Ausführungsformen, wobei das Gewichtsverhältnis der Komponente B zur Komponente C 0,5 bis 5 beträgt.

8. Formmasse gemäß einer der vorhergehenden Ausführungsformen, wobei das Gewichtsverhältnis der Komponente B zur Komponente C 1 bis 3 beträgt.

9. Formmasse gemäß einer der vorhergehenden Ausführungsformen, wobei das Gewichtsverhältnis der Komponente B zur Komponente C 1,3 bis 2 beträgt.

10. Formmasse gemäß einer der vorhergehenden Ausführungsformen, wobei Komponente C Talk enthält.

11. Formmasse gemäß einer der vorhergehenden Ausführungsformen, wobei die Komponente B ausgewählt ist aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren.

12. Formmasse gemäß einer der vorhergehenden Ausführungsformen, wobei die Komponente B ausgewählt ist aus der Gruppe bestehend aus kautschukfreien Vinyl(co)polymeren, kautschukmodifizierten Vinyl(co)polymeren und Mischungen aus jeweils einem oder mehreren derartigen Polymeren.

13. Formmasse gemäß einer der vorhergehenden Ausführungsformen, wobei der Massenanteil an freiem Bisphenol-A weniger als 20 ppm beträgt.

14. Formmasse gemäß einer der vorhergehenden Ausführungsformen, wobei der Massenanteil an freiem Bisphenol-A weniger als 10 ppm beträgt.

15. Formmasse gemäß einer der vorhergehenden Ausführungsformen, wobei der Gewichtsanteil der Komponente B1 in der Komponente B mindestens 50 % beträgt.

16. Formmasse gemäß einer der vorhergehenden Ausführungsformen, wobei der Gewichtsanteil der Komponente B1 in der Komponente B mindestens 70 % beträgt

17. Formmasse gemäß einer der vorhergehenden Ausführungsformen, wobei die Komponente A mindestens 20 Gew.-%, bezogen auf die Summe aller von Bisphenolen abgeleiteten Struktureinheiten, von Bisphenol-A abgeleitete Struktureinheiten enthält.

18. Formmasse gemäß einer der vorhergehenden Ausführungsformen, wobei die Komponente A 100 Gew.-%, bezogen auf die Summe aller von Bisphenolen abgeleiteten Struktureinheiten, von Bisphenol-A abgeleitete Struktureinheiten enthält.

19. Formmasse gemäß einer der vorhergehenden Ausführungsformen bestehend aus den Komponenten A, B, C und D.

20. Verfahren zur Herstellung einer thermoplastischen Formmasse umfassend die Schritte

(i) Herstellen eines Masterbatches durch Schmelzecompoundierung folgender Komponenten in einem Innenkneter oder einem Co-Kneter:

B) ein Polymer verschieden von Polycarbonat enthaltend Struktureinheiten abgeleitet von Bisphenol-A und verschieden von Polyestercarbonat enthaltend Struktureinheiten abgeleitet von Bisphenol-A oder eine

Mischung bestehend aus Polymeren verschieden von Polycarbonat enthaltend Struktureinheiten abgeleitet von Bisphenol-A und verschieden von Polyestercarbonat enthaltend Struktureinheiten abgeleitet von Bisphenol-A,,

wobei Komponente B besteht aus

B1) mindestens einem thermoplastischen Polymer und

optional B2) mindestens einem nicht thermoplastischen Polymer C) mindestens ein anorganischer Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, $AlO(OH)$, $Mg(OH)_2$ und Glimmer sowie Kombinationen der genannten Füllstoffe und

D) optional ein nicht polymeres Polymeradditiv und/oder mindestens ein nicht polymerer Prozesshilfsstoff, jeweils verschieden von Komponente C,

wobei das Gewichtsverhältnis der Komponente B zur Komponente C mindestens 0,5, beträgt und

wobei der Gewichtsanteil der Komponente B1 in der Komponente B mindestens 50 % beträgt

(ii) Schmelzecompoundierung des in Schritt (i) erhaltenden Masterbatches mit mindestens einem Polycarbonat und/oder Polyestercarbonat jeweils enthaltend Struktureinheiten abgeleitet von Bisphenol-A als Komponente A sowie optional weiteren Anteilen der Komponenten B, C und/oder D und/oder der Gesamtmenge von Komponente D.

21. Verfahren gemäß Ausführungsform 20, wobei Komponente B ausgewählt ist aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren.

22. Verfahren gemäß Ausführungsform 20, wobei die Komponente B ausgewählt ist aus der Gruppe bestehend aus kautschukfreien Vinyl(co)polymeren, kautschukmodifizierten Vinyl(co)polymeren und Mischungen aus jeweils einem oder mehreren derartigen Polymeren.

23. Verfahren gemäß einer der Ausführungsform 20 bis 22, wobei das Gewichtsverhältnis der Komponente B zur Komponente C mindestens 1 beträgt.

24. Verfahren gemäß einer der Ausführungsform 20 bis 22, wobei das Gewichtsverhältnis der Komponente B zur Komponente C 0,5 bis 5 beträgt.

25. Verfahren gemäß einer der Ausführungsform 20 bis 22, wobei das Gewichtsverhältnis der Komponente B zur Komponente C 1,3 bis 2 beträgt.

26. Verfahren gemäß einer der vorhergehenden Ausführungsformen 20 bis 25, wobei der Gewichtsanteil der Komponente B1 in der Komponente B mindestens 60 % beträgt.

27. Verfahren gemäß einer der vorhergehenden Ausführungsformen 20 bis 25, wobei der Gewichtsanteil der Komponente B1 in der Komponente B mindestens 70 % beträgt.

28. Verfahren gemäß einer der vorhergehenden Ausführungsformen 20 bis 27, wobei Komponente C Talk enthält.

29. Verfahren gemäß einer der vorhergehenden Ausführungsformen 20 bis 28, wobei in Schritt (i) mindestens 80 Gew.-% der Gesamtmenge der Komponente C eingesetzt wird.

30. Verfahren gemäß einer der vorhergehenden Ausführungsformen 20 bis 29, wobei in Schritt (i) die Gesamtmenge der Komponente C eingesetzt wird.

31. Verfahren gemäß einer der vorhergehenden Ausführungsformen 20 bis 30, wobei Schritt (ii) durchgeführt wird in einem Compoundierungsaggregat ausgewählt aus der Gruppe bestehend aus Einwellenextrudern, gleichläufigen oder gegenläufigen Doppelwellenextrudern, Planetwalzenextrudern, Innenknetern und Co-Knetern.

32. Verfahren gemäß einer der Ausführungsformen 20 bis 31, wobei die Schritte (i) und (ii) in einem Temperaturbereich von 200°C bis 350 °C mit einer Verweilzeit der Komponenten in der Schmelze im Bereich von 15 Sekunden bis 5 Minuten durchgeführt werden.

33. Verfahren gemäß einer der vorhergehenden Ausführungsformen 20 bis 32, wobei Schritt (i) in einem Co-Kneter durchgeführt wird.

34. Verfahren gemäß einer der vorhergehenden Ausführungsformen 20 bis 33, wobei Schritt (ii) in einem Doppelwellenextruder durchgeführt wird.

35. Verfahren gemäß Ausführungsform 33, wobei der Schritt (i) bei einer Temperatur der Schmelze im Bereich von 210 bis 260 °C durchgeführt wird.

36. Verfahren gemäß Ausführungsform 34, wobei der Schritt (ii) bei einer Temperatur der Schmelze im Bereich von 260 bis 320 °C durchgeführt wird.

37. Verfahren gemäß einer der Ausführungsformen 33 oder 35, wobei die Verweilzeit der Komponenten in der Schmelze im Schritt (i) im Bereich von 1 bis 5 Minuten liegt.

38. Verfahren gemäß einer der Ausführungsformen 33 oder 35, wobei die Verweilzeit der Komponenten in der Schmelze im Schritt (i) im Bereich von 2 bis 3,5 Minuten liegt.

39. Verfahren gemäß einer der Ausführungsformen 34 oder 36, wobei die Verweilzeit der Komponenten in der Schmelze im Schritt (ii) im Bereich von 15 bis 60 Sekunden liegt.
40. Verfahren gemäß einem der vorhergehenden Ausführungsformen 20 bis 30,
wobei der Schritt (i) in einem Co-Kneter bei einer Temperatur der Schmelze im Bereich von 210 bis 260 °C und mit einer Verweilzeit der Komponenten in der Schmelze im Bereich von 1 bis 5 Minuten
und der Schritt (ii) in einem Doppelwellenextruder bei einer Temperatur der Schmelze im Bereich von 260 bis 320 °C und mit einer Verweilzeit der Komponenten in der Schmelze im Bereich von 15 bis 60 Sekunden durchgeführt wird.
41. Verwendung einer thermoplastischen Formmasse gemäß einer der Ausführungsformen 1 bis 19 zur Herstellung eines Formkörpers.
42. Formkörper enthaltend oder bestehend aus einer Formmasse gemäß einer der Ausführungsformen 1 bis 19.
43. Formkörper enthaltend oder bestehend aus einer Formmasse hergestellt in einem Verfahren gemäß einer der Ausführungsformen 20 bis 40.

Die Erfindung soll anhand der nachfolgenden Beispiele näher erläutert werden, ohne sie jedoch hierauf zu beschränken.

## Beispiele

Komponente A-1:

Lineares Polycarbonat auf Basis Bisphenol-A, hergestellt im Phasengrenzflächenpolymerisationsverfahren, mit einem gewichtsgemittelten Molekulargewicht $M_w$ von 28.000 g/mol (bestimmt bei Raumtemperatur durch GPC in Methylenchlorid gegen einen BPA-PC-Standard).

Komponente A-2:

Lineares Polycarbonat auf Basis Bisphenol-A, hergestellt im Phasengrenzflächenpolymerisationsverfahren, mit einem gewichtsgemittelten Molekulargewicht $M_w$ von 25.000 g/mol (bestimmt bei Raumtemperatur durch GPC in Methylenchlorid gegen einen BPA-PC-Standard).

Komponente B-1:

Thermoplastisches Acrylnitril(A)-Butadien(B)-Styrol(S)-n-Butylacrylat(BA)-Polymer, hergestellt im Masse-Polymerisationsverfahren, welches eine disperse Phase aus mit Styrol-Acrylnitril-n-Butylacrylat-Copolymerisat gepfropften Kautschukpartikeln basierend auf reinem Polybutdienkautschuk als Pfropfgrundlage enthaltend Inklusionen aus Styrol-Acrylnitril-n-Butylacrylat-Copolymerisat und eine nicht an den Kautschuk gebundene Styrol-Acrylnitril-n-Butylacrylat-Copolymerisat-Matrix enthält. Komponente B-1 weist ein A:B:S:BA-Verhältnis von 22,5:10:63:4,5 Gew.-% und einen Gelgehalt, bestimmt als in Aceton unlöslicher Anteil, von 19 Gew.-% auf. Das in Tetrahydrofuran lösliche Styrol-Acrylnitril-n-Butylacrylat-Copolymer in Komponente B-1 weist ein gewichtsgemitteltes Molekulargewicht $M_w$ (gemessen per GPC in Tetrahydrofuran als Lösungsmittel mit Polystyrol als Standard) von 115 kg/mol auf. Die mittlere Partikelgröße der dispersen Phase D50, gemessen per Ultrazentrifugation, beträgt 0,5 $\mu$m. Die Schmelzeflussrate (MFR) der Komponente B-1, gemessen nach ISO 1133 (Version von 2012) bei 220°C mit einer Stempellast von 10 kg, beträgt 28 g/10 min.

Komponente B-2:

Nicht thermoplastisches Pfropfpolymerisat mit Kern-Schale-Struktur, hergestellt durch Emulsions-Polymerisation und bestehend aus 75 Gew.-% eines Silikon-Acrylat-Kompositkautschuks als Kern und 25 Gew.-% einer Polymethylmethacrylat-Hülle. Komponente B-2 weist einen Gelgehalt gemessen in Aceton bei Raumtemperatur von 90 Gew.-% auf (Metablen™ S-2030, Hersteller: Mitsubishi Chemical, Japan).

Komponente B-3:

Thermoplastisches SAN-Copolymerisat mit einem Acrylnitrilgehalt von 28 Gew.-% und einem gewichtsgemittelten Molekulargewicht von etwa 130.000 g/mol (bestimmt bei Raumtemperatur durch GPC in Tetrahydrofuran mit Polystyrol als Standard).

Komponente B-4:

Thermoplastisches SAN-Copolymerisat mit einem Acrylnitrilgehalt von 23 Gew.-% und einem gewichtsgemittelten Molekulargewicht von etwa 100.000 g/mol (bestimmt bei Raumtemperatur durch GPC in Tetrahydrofuran mit Polystyrol als Standard).

Komponente B-5

Polyethylenterephthalat (z.B. PET der Fa. Invista, Deutschland) mit einer intrinsischen Viskosität von 0,623 dl/g. Die spezifische Viskosität wird gemessen in Dichloressigsäure in einer Konzentration von 1 Gew.-% bei 25°C. Die intrinsische Viskosität wird aus der spezifischen Viskosität gemäß nachstehender Formel berechnet:

$$\text{Intrinsische Viskosität} = \text{Spezifische Viskosität} \times 0{,}0006907 + 0{,}063096$$

Komponente C:

Kompaktierter Talk mit einem Eisenoxidgehalt von 0,2 Gew.- %, einem Aluminiumoxidgehalt von 0,4 Gew.-% und einem Calciumoxidgehalt von 0,3 Gew.-%, $d_{50}$ (Sedimentationsanalyse) von 1,1 µm; Typ: Jetfine® 3CA, Hersteller: Imerys Performance Additives (Paris, Frankreich).

Komponente D-1:

Pentaerythrittetrastearat, Loxiol™ P 861/3.5 Special (Emery Oleochemicals GmbH, Düsseldorf, Deutschland).

Komponente D-2:

Irganox™ B900 (Gemisch aus 80% Irgafos™ 168 (Tris(2,4-di-tert-butyl-phenyl)-phosphit) und 20% Irganox™ 1076 (2,6-Di-tert-butyl-4-(octadecanoxycarbonylethyl)-phenol); BASF (Ludwigshafen, Deutschland).

Komponente D-3:

Fabutit™ 289: ortho-Phosphorsäure absorbiert auf Silica-Gel (Chemische Fabrik Budenheim KG, Deutschland).

Komponente D-4:

Black Pearls™ 800: Ruß (Cabot Corp., USA)

Komponente D-5

Phosphorige Säure $H_3PO_3$ als Feststoff, Sigma-Aldrich Chemie GmbH, Deutschland

Komponente D-6

Irganox™ 1010 (Pentaerythritol tetrakis(3,5-di-tert-butyl-4-hydroxyhydrocinnamat); BASF (Ludwigshafen, Deutschland)

Komponente D-7

Dimeres Phosphonit, Tetrakis(2,4-di-tert-butylphenyl)-1,1-biphenyl-4,4'-diylbisphosphonit, Hostanox™ P-EPQ, Clariant (Muttenz, Schweiz)

Komponente D-8

A-C® 907P (Honeywell International Inc., Morristown, USA): Propylen-Maleinsäureanhydrid-Copolymer mit einer Verseifungszahl von 90 mg KOH/g und einer Viskosität bei 190°C von 350 cps.

**Herstellung der Formmassen**

Vergleichsbeispiel 1:

Die Komponenten A bis D-4 wurden in einem einzigen Compoundierschritt gemäß der in Tabelle 1 dargestellten Gewichtsanteile in einem Doppelwellenextruder Clextral Evolum® 32 HT der Fa. Clextral SAS (Frankreich) bei einer am Düsenaustritt des Extruders in der Schmelze gemessenen Massetemperatur von ca. 315°C und unter Anlegen eines Unterdrucks von 100 mbar (absolut) zu einer Formmasse verarbeitet. Alle Komponenten der Zusammensetzung, mit Ausnahme des Talks, wurden gemeinsam über den Haupteinzug in den Einlauf des Extruder dosiert und durch Einbringung thermischer und mechanischer Energie aufgeschmolzen und ineinander dispergiert. Der Talk wurde über einen Seitenextruder in die Schmelzemischung der restlichen Komponenten, das heißt in eine Extruderzone vom Haupteinzug aus gesehen jenseits der Aufschmelzzone dosiert. Die Verweilzeit der Komponenten in der Schmelze bei diesem Prozess betrug ca. 30 Sekunden.

Vergleichsbeispiel 2:

Die Herstellung der Formmasse erfolgte in zwei Verfahrensschritten, welche beide in einem Doppelwellenextruder Clextral Evolum® 32 HT der Fa. Clextral SAS (Frankreich) ausgeführt wurden. In einem ersten Verfahrensschritt wurden die Gesamtmengen der Komponenten A und D-3 gemäß den in Tabelle 1 dargestellten Gewichtsanteilen bei einer am Düsenaustritt des Extruders in der Schmelze gemessenen Massetemperatur von ca. 315°C und unter Anlegen eines Unterdrucks von 100 mbar (absolut) zu einem säurestabilisierten Polycarbonat-Präcompound verarbeitet. Die Verweilzeit der Komponenten in der Schmelze in diesem ersten Verfahrensschritt betrug ca. 30 Sekunden. In einem zweiten Verfahrensschritt wurde der in Schritt 1 erhaltene säurestabilisierte Polycarbonat-Präcompound mit den anderen in Tabelle 1 angegebenen Bestandteilen in den dort angegebenen Mengenverhältnissen in demselben Doppelwellenextruder und unter denselben Temperatur-, Verweilzeit- und Vakuum-Bedingungen zu einer Formmasse verarbeitet. Dabei wurde der Talk über einen Seitenextruder in eine Schmelzezone eindosiert. Alle anderen Komponenten, inklusive des säurestabilisierten Polycarbonat-Präcompounds wurden gemeinsam über den Haupteinzug in den Extruder eingebracht, aufgeschmolzen und ineinander dispergiert, bevor der Talk über den Seitenextruder zugeführt wurde.

Erfindungsgemäßes Beispiel 3:

Die Herstellung der Formmasse erfolgte in zwei Verfahrensschritten. In einem ersten Verfahrensschritt wurden die Komponenten B-1, B-2, B-3 und C gemäß den in Tabelle 1 dargestellten Gewichtsanteilen in einem Co-Kneter vom Typ MX58 der Fa. Buss AG (Schweiz) miteinander vermischt, und zwar bei einer Temperatur, gemessen in der Schmelze mit einem Thermoelement, welches am Ende des Extruders kurz vor der Düsenplatte positioniert ist, von ca. 230°C. Unter diesen Bedingungen liegen die thermoplastischen Komponenten B-1 und B-3 als Schmelze vor, d.h. die Komponenten B-2 und C werden in diesem Verfahrensschritt in der Schmelzemischung der Komponenten B-1und B3 dispergiert, wobei im Kneter eine geschmolzene, thermoplastische Masse bestehend aus den innig vermischten Komponenten B-1, B-2, B-3 und C entsteht. Die Verweilzeit dieser geschmolzenen Masse im Kneter betrug in diesem Verfahrensschritt ca. 3 Minuten. Dieser Verfahrensschritt wurde unter Atmosphärendruck, also ohne Anliegen eines Entgasungsvakuums durchgeführt. Als Ergebnis des ersten Verfahrensschrittes wird ein Talk-Masterbatch erhalten. In einem zweiten Verfahrensschritt wurde der im Schritt 1 erhaltene Talk-Masterbatch mit den anderen in Tabelle 1 angegebenen Bestandteilen in einem Doppelwellenextruder vom Typ Clextral Evolum® 32 HT der Fa. Clextral SAS (Frankreich) bei einer am Düsenaustritt des Extruders in der Schmelze gemessenen Massetemperatur von ca. 315 °C und unter Anlegen eines Unterdrucks von 100 mbar (absolut) zu einer Formmasse verarbeitet. Die Verweilzeit der Komponenten in der Schmelze in diesem zweiten Verfahrensschritt betrug ca. 30 Sekunden. Alle Komponenten der Zusammensetzung, inklusive des im vorgeschalteten Verfahrensschritt hergestellten Talk-Masterbatches, wurden gemeinsam über den Haupteinzug in den Einlauf des Extruder dosiert und durch Einbringung thermischer und mechanischer Energie aufgeschmolzen und nachfolgend im Extruder ineinander dispergiert.

Vergleichsbeispiel 4:

Die Herstellung erfolgte wie beim Vergleichsbeispiel 1 in einem einzigen Compoundierschritt in einem Doppelwellenextruder Clextral Evolum® 32 HT der Fa. Clextral SAS (Frankreich). Anstatt der Komponente B-3 wurde die Komponente B-4 eingesetzt.

Erfindungsgemäßes Beispiel 5:

Die Herstellung erfolgte wie beim erfindungsgemäßen Beispiel 3 in zwei Verfahrensschritten, wobei wiederum der erste Verfahrensschritt in einem Co-Kneter vom Typ MX58 der Fa. Buss AG (Schweiz) und der zweite Verfahrensschritt in einem Doppelwellenextruder vom Typ Clextral Evolum® 32 HT der Fa. Clextral SAS (Frankreich) durchgeführt wurden. Anstatt der Komponente B-3 wurde die Komponente B-4 eingesetzt.

Vergleichsbeispiel 6:

Die Herstellung der Formmasse erfolgte in zwei Verfahrensschritten, welche beide in einem Doppelwellenextruder Clextral Evolum® 32 HT der Fa. Clextral SAS (Frankreich) ausgeführt wurden. In einem ersten Verfahrensschritt wurden die Komponenten B-1, B-2, B-4 und C gemäß den in Tabelle 1 dargestellten Gewichtsanteilen bei einer am Düsenaustritt des Extruders in der Schmelze gemessenen Massetemperatur von ca. 300°C und unter Anlegen eines Unterdrucks von 100 mbar (absolut) verarbeitet. Unter diesen Bedingungen liegen die thermoplastischen Komponenten B-1 und B-4 als Schmelze vor, d.h. die Komponenten B-2 und C werden in diesem Verfahrensschritt in der Schmelzemischung der Komponenten B-1 und B4 dispergiert, wobei im Extruder eine geschmolzene, thermoplastische Masse bestehend aus den innig vermischten Komponenten B-1, B-2, B-4 und C entsteht. Die Verweilzeit der Komponenten in der Schmelze in diesem ersten Verfahrensschritt betrug ca. 30 Sekunden. Als Ergebnis des ersten Verfahrensschrittes wird ein Talk-Masterbatch erhalten. In einem zweiten Verfahrensschritt wurde der im Schritt 1 erhaltene Talk-Masterbatch mit den anderen in Tabelle 1 angegebenen Bestandteilen wiederum in dem oben genannten Doppelwellenextruder vom Typ Clextral Evolum® 32 HT der Fa. Clextral SAS (Frankreich) bei einer am Düsenaustritt des Extruders in der Schmelze gemessenen Massetemperatur von ca. 315 °C und unter Anlegen eines Unterdrucks von 100 mbar (absolut) zu einer Formmasse verarbeitet. Die Verweilzeit der Komponenten in der Schmelze in diesem zweiten Verfahrensschritt betrug ca. 30 Sekunden. Alle Komponenten der Zusammensetzung, inklusive des im vorgeschalteten Verfahrensschritt hergestellten Talk-Masterbatches, wurden gemeinsam über den Haupteinzug in den Einlauf des Extruder dosiert und durch Einbringung thermischer und mechanischer Energie aufgeschmolzen und nachfolgend im Extruder ineinander dispergiert.

Vergleichsbeispiel 7:

Die Herstellung erfolgte wie beim Vergleichsbeispiel 1 in einem einzigen Compoundierschritt in einem Doppelwellenextruder Clextral Evolum® 32 HT der Fa. Clextral SAS (Frankreich). Dabei wurden die in Tabelle 1 für Vergleichsbeispiel 7 aufgeführten Bestandteile eingesetzt. Die Temperatur der Schmelze am Düsenaustritt des Extruders betrug etwa 305°C.

Erfindungsgemäßes Beispiel 8

Die Herstellung erfolgte wie beim erfindungsgemäßen Beispiel 3 in zwei Verfahrensschritten, wobei wiederum der erste Verfahrensschritt in einem Co-Kneter vom Typ MX58 der Fa. Buss AG (Schweiz) und der zweite Verfahrensschritt in einem Doppelwellenextruder vom Typ Clextral Evolum® 32 HT der Fa. Clextral SAS (Frankreich) durchgeführt wurden. Dabei wurden die in Tabelle 1 für Beispiel 8 aufgeführten Bestandteile eingesetzt. Im ersten Verfahrensschritt wurden die vollständigen Mengen der Komponenten B-5, C und D-8 zu einem Masterbatch verarbeitet. Im zweiten Verfahrensschritt wurde dieser Masterbatch mit den restlichen Komponenten vermischt und compoundiert. Im ersten Verfahrensschritt betrug dabei die Schmelzetemperatur am Düsenaustritt des Compoundieraggregats etwa 260°C, im zweiten Verfahrensschritt etwa 305°C.

Bestimmung des Gehalts an freiem Bisphenol-A im compoundierten Produkt

Zur Bestimmung des Gehaltes an freiem Bisphenol-A (verkürzt als [BPA] bezeichnet) wurden die Proben der hergestellten Granulate in Dichlormethan gelöst und mit Aceton umgefällt. Der ausgefallene Compoundanteil wurde abfiltriert und das Filtrat mittels Hochdruckflüssigkeitschromatographie mit UV-Detektor (HPLC-UV) mit einem externen Standard analysiert. Als Säulenmaterial wurde eine C18-Phase eingesetzt und als Eluent Wasser und Methanol in einem Gradienten verwendet.

Herstellung von Formkörpern und Prüfung

Zur Beurteilung der Materialduktilität unter multiaxialer Belastung wurde bei den Beispielen V4, 5 und V6 ein Durchstoßversuch gemäß ISO 6603-2 (Version von 2002) bei 23°C an jeweils zehn Prüfkörpern der Dimension von 60 mm x 60 mm x 2 mm durchgeführt. Dabei wurden die Maximalkraft und die Gesamtenergie gemessen. Als Maß für die Materialduktilität unter multiaxialer Belastung dient weiterhin der prozentuale Anteil der Sprödbrüche. Unter einem Sprödbruch wird dabei ein Bruchversagen verstanden, in denen Teile des Prüfkörpers beim Durchstoßversuch splitternd herausgebrochen werden.

Die Prüfkörper für die Durchstoßversuche wurden bei einer Massetemperatur von 260°C und bei einer Werkzeugtemperatur von 80°C auf einer Spritzgießmaschine Typ Arburg 270 E mit einer Einspritzgeschwindigkeit von 40 mm/s hergestellt.

Tabelle 1: Zusammensetzung der hergestellten Formmassen und Ihre Eigenschaften

| **Komponenten [Gew.-%]** | **V1** | **V2** | **3** | **V4** | **5** | **V6** | **V7** | **8** |
|---|---|---|---|---|---|---|---|---|
| A-1 | 48,79 | 48,79 | 48,79 | 48,79 | 48,79 | 48,79 | | |
| A-2 | | | | | | | 57,56 | 57,56 |
| B-1 | 7,97 | 7,97 | 7,97 | 7,97 | 7,97 | 7,97 | | |
| B-2 | 5,98 | 5,98 | 5,98 | 5,98 | 5,98 | 5,98 | | |
| B-3 | 15,94 | 15,94 | 15,94 | | | | | |
| B-4 | | | | 15,94 | 15,94 | 15,94 | | |
| B-5 | | | | | | | 25,47 | 25,47 |
| C | 19,92 | 19,92 | 19,92 | 19,92 | 19,92 | 19,92 | 15,00 | 15,00 |
| D-1 | 0,70 | 0,70 | 0,70 | 0,70 | 0,70 | 0,70 | 0,60 | 0,60 |
| D-2 | 0,10 | 0,10 | 0,10 | 0,10 | 0,10 | 0,10 | | |
| D-3 | 0,20 | 0,20 | 0,20 | 0,20 | 0,20 | 0,20 | | |
| D-4 | 0,40 | 0,40 | 0,40 | 0,40 | 0,40 | 0,40 | | |
| D-5 | | | | | | | 0,03 | 0,03 |
| D-6 | | | | | | | 0,20 | 0,20 |
| D-7 | | | | | | | 0,10 | 0,10 |
| D-8 | | | | | | | 1,04 | 1,04 |
| Massenanteil freies Bisphenol-A im Granulat [ppm] | 121 | 148 | 5 | 131 | 27 | 123 | 26 | 8 |
| Durchstoßversuch: Maximalkraft [N] | | | | 3315 | 3861 | 3759 | | |
| Durchstoßversuch: Gesamtenergie [J] | | | | 18 | 24 | 22 | | |
| Durchstoßversuch: Anteil Sprödbrüche [%] | | | | 20 | 0 | 40 | | |

Die Daten in Tabelle 1 zeigen, dass Beispiel 3 hergestellt in dem erfindungsgemäßen Verfahren einen deutlich niedrigeren Gehalt an freiem Bisphenol-A im Granulat aufweist als die Vergleichsbeispiele V1 und V2, welche mit anderen Verfahren wurden. Sowohl in den Fällen, in denen in einem einzigen Schritt alle Komponenten vermischt werden (V1) als auch in einem alternativen zweischrittigen Compoundierungsverfahren, in dem zunächst aus den Komponenten A und D-3 in einem Doppelwellenextruder eine säurestabilisierter Polycarbonat-Präcompound hergestellt wird (V2), wird ein unvorteilhaft hohes Niveau an freiem Bisphenol-A erhalten.

In Vergleichsbeispiel 4 zeigt sich nochmals, dass durch ein Verfahren mit nur einem Compoundierschritt ein hoher Gehalt an freiem Bisphenol-A erhalten wird. Aus dem erfindungsgemäßen Beispiel 5 und dem Vergleichsbeispiel 6 ist erkennbar, dass nur mit dem erfindungsgemäßen Verfahren ein niedriger Gehalt an freiem Bisphenol-A erreicht wird. Wird der erste Verfahrensschritt in einem Doppelwellenextruder durchgeführt, ist der Gehalt an freiem Bisphenol-A vielfach höher.

Weiterhin sind für die Beispiele V4, 5 und V6 Informationen zur Materialduktilität der Formmassen angegeben. Die erfindungsgemäße Formmasse aus Beispiel 5 weist eine höhere Maximalkraft und eine höhere Gesamtenergie im Durchstoßversuch auf als die Vergleichsbeispiele V4 und V6. Insbesondere aber tritt bei Beispiel 5 im Gegensatz zu V4 und V6 kein Sprödbruch (splitterndes Bruchversagen) auf.

Das Vergleichsbeispiel V7 und das erfindungsgemäße Beispiel 8 zeigen, dass eine Reduzierung des Gehalts an freiem Bisphenol-A auch erreicht wird, wenn im erfindungsgemäßen Verfahren als Komponente B ein Polyester eingesetzt wird.

## Patentansprüche

1. Thermoplastische Formmasse enthaltend

A) mindestens ein Polycarbonat und/oder Polyestercarbonat, jeweils enthaltend Struktureinheiten abgeleitet von Bisphenol-A,
B) ein weiteres Polymer verschieden von Komponente A oder eine Mischung bestehend aus Polymeren jeweils verschieden von Komponente A,
wobei Komponente B besteht aus
B1) mindestens einem thermoplastischen Polymer und
optional B2) mindestens einem nicht thermoplastischen Polymer,
C) mindestens einen anorganischen Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, AlO(OH), $Mg(OH)_2$ und Glimmer sowie Kombinationen der genannten Füllstoffe und
D) optional mindestens ein nicht polymeres Polymeradditiv und/oder mindestens einen nicht polymeren Prozesshilfsstoff, jeweils verschieden von Komponente C,
wobei das Gewichtsverhältnis der Komponente B zur Komponente C mindestens 0,5 beträgt und wobei der Gewichtsanteil der Komponente B1 in der Komponente B mindestens 20 % beträgt,
und wobei die Formmasse einen Massenanteil an freiem Bisphenol-A von weniger als 30 ppm aufweist.

2. Formmasse gemäß Anspruch 1 enthaltend

30 bis 85 Gew.-% der Komponente A,
2 bis 50 Gew.-% der Komponente B,
3 bis 40 Gew.-%, der Komponente C,
0 bis 10 Gew.-%, der Komponente D.

3. Formmasse gemäß einem der vorhergehenden Ansprüche, wobei das Gewichtsverhältnis der Komponente B zur Komponente C 0,5 bis 5 beträgt.

4. Formmasse gemäß einem der vorhergehenden Ansprüche, wobei Komponente C Talk enthält.

5. Formmasse gemäß einem der vorhergehenden Ansprüche, wobei die Komponente B ausgewählt ist aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren.

6. Formmasse gemäß einer der vorhergehenden Ansprüche, wobei die Komponente A mindestens 20 Gew.-%, bezogen auf die Summe aller von Bisphenolen abgeleiteten Struktureinheiten, von Bisphenol-A abgeleitete Struktureinheiten enthält.

7. Verfahren zur Herstellung einer thermoplastischen Formmasse umfassend die Schritte

(i) Herstellen eines Masterbatches durch Schmelzecompoundierung folgender Komponenten in einem Innenkneter oder einem Co-Kneter:

B) ein Polymer verschieden von Polycarbonat enthaltend Struktureinheiten abgeleitet von Bisphenol-A und verschieden von Polyestercarbonat enthaltend Struktureinheiten abgeleitet von Bisphenol-A oder eine Mischung bestehend aus Polymeren verschieden von Polycarbonat enthaltend Struktureinheiten abgeleitet von Bisphenol-A und verschieden von Polyestercarbonat enthaltend Struktureinheiten abgeleitet von Bisphenol-A,
wobei Komponente B besteht aus
B1) mindestens einem thermoplastischen Polymer und
optional B2) mindestens einem nicht thermoplastischen Polymer,
C) mindestens ein anorganischer Füllstoff ausgewählt aus der Gruppe bestehend aus Quarzverbindungen, Talk, Wollastonit, Kaolin, $CaCO_3$, Titandioxid und Titandioxid in Kombination mit anderen anorganischen Pigmenten, $Al(OH)_3$, AlO(OH), $Mg(OH)_2$ und Glimmer sowie Kombinationen der genannten Füllstoffe und
D) optional ein nicht polymeres Polymeradditiv und/oder mindestens ein nicht polymerer Prozesshilfsstoff, jeweils verschieden von Komponente C,

wobei das Gewichtsverhältnis der Komponente B zur Komponente C mindestens 0,5 beträgt, und wobei der Gewichtsanteil der Komponente B1 in der Komponente B mindestens 50 % beträgt,

(ii) Schmelzecompoundierung des in Schritt (i) erhaltenden Masterbatches mit mindestens einem Polycarbonat und/oder Polyestercarbonat, jeweils enthaltend Struktureinheiten abgeleitet von Bisphenol-A, als Komponente A sowie optional weiteren Anteilen der Komponenten B, C und/oder D und/oder der Gesamtmenge von Komponente D.

**8.** Verfahren gemäß Anspruch 7, wobei Komponente C Talk enthält.

**9.** Verfahren gemäß einer der Ansprüche 7 oder 8, wobei die Komponente B ausgewählt ist aus der Gruppe bestehend aus kautschukfreien Vinyl(co)polymeren, kautschukmodifizierten Vinyl(co)polymeren, aromatischen Polyestern und Mischungen aus jeweils einem oder mehreren derartigen Polymeren.

**10.** Verfahren gemäß einem der Ansprüche 7 bis 9, wobei der Schritt (ii) durchgeführt wird in einem Compoundierungsaggregat ausgewählt aus der Gruppe bestehend aus Einwellenextrudern, gleichläufigen oder gegenläufigen Doppelwellenextrudern, Planetwalzenextrudern, Innenknetern und Co-Knetern.

**11.** Verfahren gemäß einem der Ansprüche 7 bis 10, wobei Schritt (i) in einem Co-Kneter durchgeführt wird.

**12.** Verfahren gemäß einem der Ansprüche 7 bis 11, wobei Schritt (ii) in einem Doppelwellenextruder durchgeführt wird.

**13.** Verfahren gemäß einem der vorhergehenden Ansprüche 7 bis 9, wobei der Schritt (i) in einem Co-Kneter bei einer Temperatur der Schmelze im Bereich von 210 bis 260 °C und der Schritt (ii) in einem Doppelwellenextruder bei einer Temperatur der Schmelze im Bereich von 260 bis 320 °C durchgeführt wird.

**14.** Verfahren gemäß einem der vorhergehenden Ansprüche 7 bis 9 oder 13, wobei der Schritt (i) in einem Co-Kneter mit einer Verweilzeit der Komponenten in der Schmelze im Bereich von 1 bis 5 Minuten und der Schritt (ii) in einem Doppelwellenextruder mit einer Verweilzeit der Komponenten in der Schmelze im Bereich von 15 bis 60 Sekunden durchgeführt wird.

**15.** Formkörper enthaltend eine Formmasse gemäß einem der Ansprüche 1 bis 6 oder bestehend aus einer Formmasse gemäß einem der Ansprüche 1 bis 6 oder enthaltend eine Formmasse hergestellt in einem Verfahren gemäß einem der Ansprüche 7 bis 14 oder bestehend aus einer Formmasse hergestellt in einem Verfahren gemäß einem der Ansprüche 7 bis 14.

## Claims

**1.** Thermoplastic moulding compound containing

A) at least one polycarbonate and/or polyester carbonate in each case containing structural units derived from bisphenol A,
B) a further polymer distinct from component A or a mixture consisting of polymers in each case distinct from component A,
wherein component B consists of
B1) at least one thermoplastic polymer and
optionally B2) at least one non-thermoplastic polymer,
C) at least one inorganic filler selected from the group consisting of quartz compounds, talc, wollastonite, kaolin, $CaCO_3$, titanium dioxide and titanium dioxide in combination with other inorganic pigments, $Al(OH)_3$, $AlO(OH)$, $Mg(OH)_2$ and mica and combinations of the recited fillers and
D) optionally at least one non-polymeric polymer additive and/or at least one non-polymeric process auxiliary, in each case distinct from component C,
wherein the weight ratio of component B to component C is at least 0.5
and wherein the weight fraction of component B1 in component B is at least 20%,
and wherein the moulding compound has a mass fraction of free bisphenol A of less than 30 ppm.

**2.** Moulding compound according to Claim 1, containing

30% to 85% by weight of component A,
2% to 50% by weight of component B,
3% to 40% by weight of component C,
0% to 10% by weight of component D.

**3.** Moulding compound according to either of the preceding claims, wherein the weight ratio of component B to component C is 0.5 to 5.

**4.** Moulding compound according to any of the preceding claims, wherein component C contains talc.

**5.** Moulding compound according to any of the preceding claims, wherein component B is selected from the group consisting of rubber-free vinyl (co)polymers, rubber-modified vinyl (co)polymers, aromatic polyesters and mixtures of in each case one or more such polymers.

**6.** Moulding compound according to any of the preceding claims, wherein component A contains at least 20% by weight, based on the sum of all structural units derived from bisphenols, of structural units derived from bisphenol A.

**7.** Process for producing a thermoplastic moulding compound comprising the steps of

(i) producing a masterbatch by melt compounding the following components in an internal kneader or a co-kneader:

B) a polymer distinct from polycarbonate containing structural units derived from bisphenol A and distinct from polyester carbonate containing structural units derived from bisphenol A or a mixture consisting of polymers distinct from polycarbonate containing structural units derived from bisphenol A and distinct from polyester carbonate containing structural units derived from bisphenol A,
wherein component B consists of
B1) at least one thermoplastic polymer and
optionally B2) at least one non-thermoplastic polymer,
C) at least one inorganic filler selected from the group consisting of quartz compounds, talc, wollastonite, kaolin, $CaCO_3$, titanium dioxide and titanium dioxide in combination with other inorganic pigments, $Al(OH)_3$, $AlO(OH)$, $Mg(OH)_2$ and mica and combinations of the recited fillers and
D) optionally a non-polymeric polymer additive and/or at least one non-polymeric process auxiliary, in each case distinct from component C,
wherein the weight ratio of component B to component C is at least 0.5,
and
wherein the weight fraction of component B1 in component B is at least 50%,

(ii) melt compounding the masterbatch obtained in step (i) with at least one polycarbonate and/or polyester carbonate, in each case containing structural units derived from bisphenol A, as component A and optionally further proportions of components B, C and/or D and/or the total amount of component D.

**8.** Process according to Claim 7, wherein component C contains talc.

**9.** Process according to either of Claims 7 or 8, wherein component B is selected from the group consisting of rubber-free vinyl (co)polymers, rubber-modified vinyl (co)polymers, aromatic polyesters and mixtures of in each case one or more such polymers.

**10.** Process according to any of Claims 7 to 9, wherein step (ii) is performed in a compounding apparatus selected from the group consisting of single-shaft extruders, co-rotating or counter-rotating twin-screw extruders, planetary roller extruders, internal kneaders and co-kneaders.

**11.** Process according to any of Claims 7 to 10, wherein step (i) is performed in a co-kneader.

**12.** Process according to any of Claims 7 to 11, wherein step (ii) is performed in a twin-screw extruder.

**13.** Process according to any of preceding Claims 7 to 9, wherein step (i) is performed in a co-kneader at a temperature of the melt in the range from 210°C to 260°C and step (ii) is performed in a twin-screw extruder at a temperature of the

melt in the range from 260°C to 320°C.

**14.** Process according to any of preceding Claims 7 to 9 or 13, wherein step (i) is performed in a co-kneader with a residence time of the components in the melt in the range from 1 to 5 minutes and step (ii) is performed in a twin-screw extruder with a residence time of the components in the melt in the range from 15 to 60 seconds.

**15.** Shaped article containing a moulding compound according to any of Claims 1 to 6 or consisting of a moulding compound according to any of Claims 1 to 6 or containing a moulding compound produced in a process according to any of Claims 7 to 14 or consisting of a moulding compound produced in a process according to any of Claims 7 to 14.

**Revendications**

**1.** Matière à mouler thermoplastique contenant

A) au moins un polycarbonate et/ou un polyestercarbonate, contenant chacun des unités structurales dérivées de bisphénol A,
B) un polymère supplémentaire différent du composant A ou un mélange constitué de polymères différents chacun du composant A,
le composant B consistant en
B1) au moins un polymère thermoplastique et éventuellement B2) au moins un polymère non thermoplastique,
C) au moins une charge inorganique choisie dans le groupe constitué par les composés de quartz, le talc, la wollastonite, le kaolin, $CaCO_3$, le dioxyde de titane et le dioxyde de titane en association avec d'autres pigments inorganiques, $Al(OH)_3$, $AlO(OH)$, $Mg(OH)_2$ et le mica ainsi que des associations des charges citées et
D) éventuellement au moins un additif non polymère pour polymère et/ou au moins un agent de mise en œuvre non polymère, chacun étant différent du composant C,
le rapport en poids du composant B au composant C valant au moins 0,5
et la proportion en poids du composant B1 dans le composant B valant au moins 20 %,
et la matière à mouler ayant une teneur en bisphénol A libre inférieure à 30 ppm.

**2.** Matière à mouler selon la revendication 1, contenant

30 à 85 % en poids du composant A,
2 à 50 % en poids du composant B,
3 à 40 % en poids du composant C,
0 à 10 % en poids du composant D.

**3.** Matière à mouler selon l'une quelconque des revendications précédentes, dans laquelle le rapport en poids du composant B au composant C vaut de 0,5 à 5.

**4.** Matière à mouler selon l'une quelconque des revendications précédentes, dans laquelle le composant C contient du talc.

**5.** Matière à mouler selon l'une quelconque des revendications précédentes, dans laquelle le composant B est choisi dans le groupe constitué par les (co)polymères vinyliques exempts de caoutchouc, les (co)polymères vinyliques modifiés avec du caoutchouc, les polyesters aromatiques et des mélanges de respectivement un ou plusieurs de tels polymères.

**6.** Matière à mouler selon l'une quelconque des revendications précédentes, dans laquelle le composant A contient au moins 20 % en poids, par rapport à la somme de toutes les unités structurales dérivées de bisphénols, d'unités structurales dérivées du bisphénol A.

**7.** Procédé pour la production d'une matière à mouler thermoplastique, comprenant les étapes

(i) préparation d'un mélange-maître par compoundage à l'état fondu des composants suivants dans un malaxeur interne ou un co-malaxeur :

B) un polymère différent du polycarbonate contenant des unités structurales dérivées du bisphénol A et

différent du polyestercarbonate contenant des unités structurales dérivées du bisphénol A, ou un mélange constitué de polymères différents du polycarbonate contenant des unités structurales dérivées du bisphénol A et différents du polyestercarbonate contenant des unités structurales dérivées du bisphénol A,
le composant B consistant en
B1) au moins un polymère thermoplastique et éventuellement B2) au moins un polymère non thermoplastique,
C) au moins une charge inorganique choisie dans le groupe constitué par les composés de quartz, le talc, la wollastonite, le kaolin, $CaCO_3$, le dioxyde de titane et le dioxyde de titane en association avec d'autres pigments inorganiques, $Al(OH)_3$, AlO(OH), $Mg(OH)_2$ et le mica ainsi que des associations des charges citées et
D) éventuellement au moins un additif non polymère pour polymère et/ou au moins un agent de mise en œuvre non polymère, chacun étant différent du composant C,
le rapport en poids du composant B au composant C valant au moins 0,5,
et
la proportion en poids du composant B1 dans le composant B valant au moins 50 %,

ii) compoundage à l'état fondu du mélange-maître obtenu dans l'étape (i) avec au moins un polycarbonate et/ou un polyestercarbonate, contenant chacun des unités structurales dérivées du bisphénol A, en tant que composant A, ainsi qu'éventuellement des fractions supplémentaires des composants B, C et/ou D et/ou de la quantité totale de composant D.

**8.** Procédé selon la revendication 7, dans lequel le composant C contient du talc.

**9.** Procédé selon l'une quelconque des revendications 7 et 8 précédentes, dans lequel le composant B est choisi dans le groupe constitué par les (co)polymères vinyliques exempts de caoutchouc, les (co)polymères vinyliques modifiés avec du caoutchouc, les polyesters aromatiques et des mélanges de respectivement un ou plusieurs de tels polymères.

**10.** Procédé selon l'une quelconque des revendications 7 à 9, dans lequel l'étape (ii) est effectuée dans un appareil de compoundage choisi dans le groupe constitué par les extrudeuses monovis, les extrudeuses double vis, co-rotatives ou contrarotatives, les extrudeuses à cylindres planétaires, les malaxeurs internes et les co-malaxeurs.

**11.** Procédé selon l'une quelconque des revendications 7 à 10, dans lequel l'étape (i) est effectuée dans un co-malaxeur.

**12.** Procédé selon l'une quelconque des revendications 7 à 11, dans lequel l'étape (ii) est effectuée dans une extrudeuse double vis.

**13.** Procédé selon l'une quelconque des revendications 7 à 9 précédentes, dans lequel l'étape (i) est effectuée dans un co-malaxeur à une température de la masse fondue dans la plage de 210 à 260 °C et l'étape (ii) est effectuée dans une extrudeuse double vis à une température de la masse fondue dans la plage de 260 à 320 °C.

**14.** Procédé selon l'une quelconque des revendications 7 à 9 ou 13 précédentes, dans lequel l'étape (i) est effectuée dans un co-malaxeur avec un temps de séjour des composants dans la masse fondue dans la plage de 1 à 5 minutes et l'étape (ii) est effectuée dans une extrudeuse double vis avec un temps de séjour des composants dans la masse fondue dans la plage de 15 à 60 secondes.

**15.** Corps moulé contenant une matière à mouler selon l'une quelconque des revendications 1 à 6 ou constitué d'une matière à mouler selon l'une quelconque des revendications 1 à 6 ou contenant une matière à mouler produite dans un procédé selon l'une quelconque des revendications 7 à 14 ou constitué d'une matière à mouler produite dans un procédé selon l'une quelconque des revendications 7 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0391413 A2
- EP 0452788 A2
- WO 9851737 A1
- WO 2013060687 A1
- WO 2008122359 A1
- WO 9928386 A1
- WO 2018037037 A1
- US 20060287422 A1
- US 2007232739 A1
- DE S1495626 A
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE 2035390 A
- US 3644574 A
- DE 2248242 A
- GB 1409275 A
- US 4937285 P
- DE 3704657 A
- DE 3704655 A
- DE 3631540 A
- DE 3631539 A
- DE 2407674 A
- DE 2407776 A
- DE 2715932 A
- DE 1900270 A
- US 3692744 A


### In der Beschreibung aufgeführte Nicht-Patentliteratur


- **LLMANNS**. *Enzyklopädie der Technischen Chemie*, 1980, vol. 19, 280
- Kunststoff-Handbuch. Carl-Hanser-Verlag, 1973, vol. VIII, 695